(19) Europäisches Patentamt / European Patent Office / Office européen des brevets

(11) **EP 3 608 777 B1**

(12) **EUROPEAN PATENT SPECIFICATION**

(45) Date of publication and mention
of the grant of the patent:
**09.07.2025   Bulletin 2025/28**

(21) Application number: **18822676.5**

(22) Date of filing: **21.05.2018**

(51) International Patent Classification (IPC):
**G06F 9/44** *(2018.01)*       **G06F 9/448** *(2018.01)*
**G06N 3/006** *(2023.01)*       **G06N 7/01** *(2023.01)*
**B25J 11/00** *(2006.01)*

(52) Cooperative Patent Classification (CPC):
**B25J 11/0005; G06F 9/44; G06F 9/448; G06N 7/01;**
G06N 3/006; G06N 3/044

(86) International application number:
**PCT/CN2018/087616**

(87) International publication number:
**WO 2019/001170 (03.01.2019 Gazette 2019/01)**

(54) **METHOD AND APPARATUS OF INTELLIGENT DEVICE FOR EXECUTING TASK**

VERFAHREN UND EINRICHTUNG EINER INTELLIGENTEN VORRICHTUNG ZUR AUSFÜHRUNG
EINER AUFGABE

PROCÉDÉ ET APPAREIL DE DISPOSITIF INTELLIGENT POUR EXÉCUTER UNE TÂCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2017   CN 201710508911**

(43) Date of publication of application:
**12.02.2020   Bulletin 2020/07**

(73) Proprietor: **Huawei Technologies Co., Ltd.
Longgang District
Shenzhen, Guangdong 518129 (CN)**

(72) Inventor: **LI, Nanjun
Shenzhen
Guangdong 518129 (CN)**

(74) Representative: **Gill Jennings & Every LLP
The Broadgate Tower
20 Primrose Street
London EC2A 2ES (GB)**

(56) References cited:
**CN-A- 105 182 777       CN-A- 106 484 253
CN-A- 106 896 767       US-B2- 9 687 984**

EP 3 608 777 B1

## EP 3 608 777 B1

**Description**

**TECHNICAL FIELD**

This application relates to the field of artificial intelligence technologies, and in particular, to a method and an apparatus for executing a task by an intelligent device.

**BACKGROUND**

With development of artificial intelligence technologies, various intelligent devices are widely applied. For example, an intelligent device may be a robot that may call, once finding a person falling on the ground, the person's family member.

Currently, a robot may execute various types of tasks, for example, execute an image processing task, a speech recognition task, and a task of dialing a phone number. Specific processing of executing a task by the robot may be: The robot may pre-store a correspondence between triggering information and a task, the robot may detect different triggering information by using various components (for example, a photographing component and a voice obtaining component), and each time when the robot detects triggering information by using a component, the robot may determine, based on the pre-stored correspondence between triggering information and a task, a task corresponding to the triggering information, and then may execute the task. For example, when the robot detects, by using the photographing component, triggering information "A person falls on the ground", the robot may execute the task of dialing a phone number.

US 9687984B2 discloses a mobile robotic apparatus configured with an adaptive controller and a sensor component. The sensor component is characterized by an aperture/field of view and provides information associated with objects within the field-of-view. CN106484253A discloses an intelligent response method of user equipment and the user equipment. The intelligent response method of the user equipment comprises the steps of detecting current vital sign information of a user; and obtaining a current user state corresponding to the user according to the vital sign information and making a corresponding response according to the user state and a default rule. CN106896767A discloses an artificial intelligence system integrating light, machinery, electricity, and information and formed by a hardware system and a software program. The modules of the hardware system is distributed or embedded into the main body or the surface of the limbs of the robot body or inside the robot body according to the design and the specific functions. The software program corresponding to the specific function of the robot operates in the hardware system.

In a process of implementing this application, the inventor finds that the prior art has at least the following problem:

In many cases, triggering information detected by using different components may correspond to a same task. For example, when a person falls on the ground, the robot may detect triggering information "A person falls on the ground" by using the photographing component, or may detect triggering information "A person falls on the ground" by using the voice obtaining component. In this case, the triggering information detected by the two components corresponds to a same event (a person falls on the ground), that is, correspond to a same task. Based on the manner in which the robot executes a task, in this case, the robot may execute the corresponding task twice for the same event corresponding to the two pieces of triggering information, leading to resource waste.

**SUMMARY**

To resolve a problem of resource waste, implementations of this application provide a method and an apparatus for executing a task by an intelligent device. The technical solutions are as follows:

The invention has been defined in the independent claims. Further specific technical features have been defined in the dependent claims.

According to a first aspect, a method for executing a task by an intelligent device is provided. The method includes: determining, based on at least one piece of triggering information when an intelligent device detects the at least one piece of triggering information, at least one to-be-processed event triggered by the at least one piece of triggering information, where the at least one to-be-processed event is different from each other, the triggering information is outside information detected by the intelligent device by using a sensor, and the event is an event that happens outside and that is determinable for the intelligent device when the intelligent device detects the triggering information; selecting, for each determined event and from at least one task corresponding to the event, a target task corresponding to the event, where the task is a processing manner available to the intelligent device for the event that happens outside; and executing the target task corresponding to each event.

In the solution in this implementation of this application, each time when the intelligent device detects the at least one piece of triggering information, the intelligent device may combine all detected triggering information to determine the at least one to-be-processed event that is different from each other and that is triggered by all the triggering information. Triggering information detected by a robot is not in one-to-one correspondence with an event, and different triggering information may trigger a same event. The detected at least one piece of triggering information may be detected at the same time, or may be detected within relatively short preset duration. After the triggered event is determined, the target task corresponding to each event may be determined, so that the intelligent device can execute the target task corresponding to each event. In this way, the robot combines the detected triggering information to determine events that are different from each other, so as to prevent a corresponding task from being executed twice for a same event corresponding to different triggering information, thereby preventing resource waste.

The determining, based on at least one piece of triggering information when an intelligent device detects the at least one piece of triggering information, at least one to-be-processed event triggered by the at least one piece of triggering information includes: determining, when the intelligent device detects the at least one piece of triggering information, a to-be-processed event triggered by each piece of detected triggering information; and performing deduplication processing on all determined events, to obtain the at least one to-be-processed event triggered by the at least one piece of triggering information.

In the solution in this implementation of this application, when the intelligent device detects the at least one piece of triggering information, for each piece of triggering information, the intelligent device may determine the event triggered by the triggering information, and then may delete a repeated event of the events triggered by the triggering information, and determine, as the at least one to-be-processed event triggered by the at least one piece of triggering information, remaining events that are different from each other of the events triggered by the triggering information. The determining, when the intelligent device detects the at least one piece of triggering information, an event triggered by each piece of detected triggering information includes: when the intelligent device detects the at least one piece of triggering information, classifying each piece of detected triggering information based on a pre-trained classification model and each event in an event set, and determining the event corresponding to each piece of triggering information.

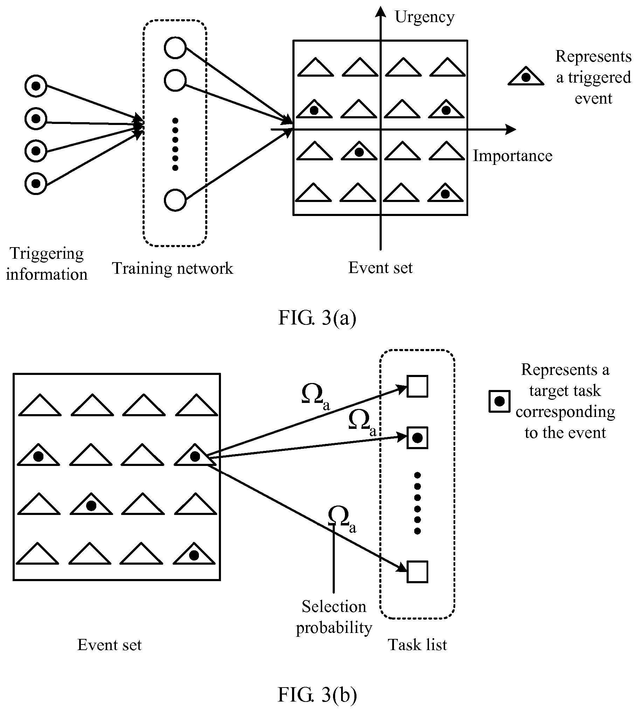

In the solution in this implementation of this application, each time when the intelligent device detects the at least one piece of triggering information, the intelligent device may use each of the at least one piece of triggering information as an input of a neural network algorithm (a classifier), classify each piece of triggering information by using the neural network algorithm (that is, by using a training network), and determine a category corresponding to the triggering information (that is, determine the event triggered by the triggering information). Each category in the neural network algorithm may be each event in a set of events that can be recognized by the robot, as shown in FIG. 3(a). After the category of each piece of triggering information is determined, a repeated event may be deleted, to obtain the event triggered by the at least one piece of triggering information.

In a possible implementation, the selecting, for each determined event and from at least one task corresponding to the event, a target task corresponding to the event includes: for each determined event, selecting, from the at least one task corresponding to the event and based on a selection probability of each of the at least one task corresponding to the event, the target task corresponding to the event.

In the solution in this implementation of this application, after determining the at least one triggered event, for each of the at least one event, the intelligent device may determine, based on a correspondence between an event, a task, and a selection probability, the at least one task corresponding to the event, and then may randomly select, from a plurality of tasks and based on the selection probability corresponding to each determined task, the target task corresponding to the event. The selection probability represents a possibility that a corresponding task is selected.

In a possible implementation, the method further includes: when a satisfaction degree value entered for execution of a first task of a target task corresponding to a first event is received, adjusting, based on the entered satisfaction degree value, a selection probability of the first task corresponding to the first event.

In the solution in this implementation of this application, a human-computer interaction interface (a visible graphical interface and a touch manner) may be disposed on the intelligent device, and a user may make manual intervention by using the human-computer interaction interface. Specifically, each time after the intelligent device executes the target task corresponding to the triggered event (which may be referred to as the first event), that is, after the intelligent device executes a target task corresponding to an event or when the intelligent device executes a target task corresponding to an event, the user may enter, based on a satisfaction degree of the user, a satisfaction degree value for current execution of the first task of the target task corresponding to the event, and the intelligent device may receive the satisfaction degree value (which may be represented by s, and s may be a value greater than 0 and less than 1) that is entered by the user for execution of the first task corresponding to the first event by the intelligent device. In this case, the intelligent device may adjust the selection probability of the first task corresponding to the first event. In addition, the intelligent device may further adjust a selection probability of an event other than the first event of all events corresponding to the first task. In this way, when the user expects the device to process an event in a processing manner, the user may enter a relatively high satisfaction degree value for a target task executed by the intelligent device, so that the intelligent device can increase a selection probability of the target task corresponding to the event, and the intelligent device keeps adapting to a habit of the user.

In a possible implementation, the method further includes: determining, based on pre-stored importance and urgency that are corresponding to each event in the event set, importance and urgency that are corresponding to each of the at least one event; and determining, for each event, a priority of the event based on the determined importance and urgency that are corresponding to the event, where the executing the target task corresponding to each event includes: executing, based on the priority of each event in descending order of priorities, the target task corresponding to each event.

In the solution in this implementation of this application, the intelligent device may pre-store the importance and urgency that are corresponding to each event in the event set. After determining the at least one triggered event, the intelligent device may determine, from the pre-stored importance and urgency that are corresponding to events in the event set, the importance and urgency that are corresponding to each of the at least one event, and then may determine, for each event, the priority of the event based on the determined importance and urgency that are corresponding to the event. For example, a sum of the importance and urgency that are corresponding to the event may be calculated, and the calculated sum may be used as the priority of the event. After determining the priority of each event, the intelligent device may execute, in descending order of priorities, the target task corresponding to each event. In this way, when a plurality of events need to be processed, the intelligent device may preferentially process a more important and urgent event.

In a possible implementation, the determining, for each event, a priority of the event based on the determined importance and urgency that are corresponding to the event includes: for each event, obtaining an actual cost and an expected cost of previous execution of a task corresponding to the event; determining, based on the actual cost and the expected cost of the previous execution of the task corresponding to the event, an expected cost required for current execution of the target task corresponding to the event; and determining the priority of the event based on the determined importance and urgency that are corresponding to the event and the determined expected cost required for the current execution of the target task corresponding to the event.

In the solution in this implementation of this application, each time after the intelligent device executes a task corresponding to each event in the event set, that is, each time after the intelligent device processes the event, the intelligent device may record an actual cost of current execution of the task corresponding to the event. The actual cost may be energy (for example, electric power or central processing unit usage) or time consumed for executing the task corresponding to the event, or may be a combination of energy and time. After determining at least one currently-triggered event, the intelligent device may obtain, for each event, the actual cost and the expected cost of the previous execution of the task corresponding to the event, and then may determine the expected cost required for the current execution of the target task corresponding to the event. After obtaining the expected cost and corresponding importance and urgency, the robot may determine the priority of the event.

In a possible implementation, the determining, based on pre-stored importance and urgency that are corresponding to each event in the event set, importance and urgency that are corresponding to each of the at least one event includes: determining, based on a pre-stored importance-urgency matrix and an event corresponding to each position in the importance-urgency matrix, the importance and urgency that are corresponding to each of the at least one event, where each position in the importance-urgency matrix represents importance and urgency of the event corresponding to the position.

In the solution in this implementation of this application, the intelligent device may pre-store the importance-urgency matrix. Positions in the importance-urgency matrix correspond to different events, each position represents the importance and urgency of the event corresponding to the position, and the matrix may be referred to as an Eisenhower Decision Matrix (Eisenhower Decision Matrix, EDM). After determining the at least one event, the intelligent device may determine, from the importance-urgency matrix, importance and urgency that are corresponding to a position of each of the at least one event in the importance-urgency matrix.

In a possible implementation, the method further includes: for each event in the event set, determining, based on pre-stored corresponding probabilities of the event in positions in the importance-urgency matrix, a position corresponding to a largest probability as a position corresponding to the event.

In the solution in this implementation of this application, the intelligent device may preset the corresponding probabilities of each event in the positions in the importance-urgency matrix. The probability may be a value having a preset quantity of digits, and a sum of the corresponding probabilities of each event in the positions in the importance-urgency matrix is 1. For each event in the event set, when determining the position of each event in the importance-urgency matrix, the intelligent device may determine the largest probability from the corresponding probabilities of the event in the positions in the importance-urgency matrix, and then may determine the position corresponding to the largest probability as the corresponding position of the event in the importance-urgency matrix.

In a possible implementation, the method further includes: when an instruction for adjusting a position corresponding to a second event from a first position to a second position is received, obtaining an excitation factor corresponding to each position in the importance-urgency matrix for the adjustment instruction, where an excitation factor corresponding to the second position is largest, and an excitation factor corresponding to the first position is smallest; calculating, based on the obtained excitation factor corresponding to each position in the importance-urgency matrix and corresponding probabilities of the second event in the positions in the importance-urgency matrix, new corresponding probabilities of the second event in the positions in the importance-urgency matrix; and determining, based on the new corresponding probabilities of the second event in the positions in the importance-urgency matrix, the second position corresponding to a new largest probability as the position corresponding to the event.

In the solution in this implementation of this application, the intelligent device may pre-store the excitation factor $K_{ij}$ corresponding to each position in the importance-urgency matrix. For different adjustment instructions, excitation factors corresponding to each position in the importance-urgency matrix are different. For an event whose position is adjusted, an excitation factor corresponding to a position after adjustment is largest, an excitation factor corresponding to a position before adjustment is smallest, and an excitation factor corresponding to another position is between the largest and the smallest. When the user adjusts the position corresponding to the second event from the first position to the second position, the intelligent device may receive the instruction for adjusting the position corresponding to the second event from the first position to the second position. In this case, the intelligent device may obtain the excitation factor corresponding to each position in the importance-urgency matrix for the adjustment instruction, and then may adjust, by using the excitation factor corresponding to each position, a corresponding probability of the second event in each position in the importance-urgency matrix, to obtain the new corresponding probabilities of the second event in the positions in the importance-urgency matrix (that is, obtain the corresponding probabilities of the second event in the positions in the importance-urgency matrix after position adjustment). After obtaining the new corresponding probabilities of the second event in the positions in the importance-urgency matrix, the intelligent device may determine, based on the new corresponding probabilities of the second event in the positions in the importance-urgency matrix, the second position corresponding to the new largest probability as the position corresponding to the event.

In a possible implementation, the method further includes: when an instruction for adjusting a position corresponding to a second event from a first position to a second position is received, determining a corresponding probability of the second event in the first position in the importance-urgency matrix as a new corresponding probability of the second event in the second position, and determining a corresponding probability of the second event in the second position in the importance-urgency matrix as a new corresponding probability of the second event in the first position; and determining, based on new corresponding probabilities of the second event in the positions in the importance-urgency matrix, the second position corresponding to a new largest probability as the position corresponding to the event.

In the solution in this implementation of this application, when receiving the instruction for adjusting the position corresponding to the second event from the first position to the second position, the intelligent device may adjust only the corresponding probabilities of the second event in the first position and the second position, and does not adjust probabilities corresponding to the other positions. Specifically, when the instruction for adjusting the position corresponding to the second event from the first position to the second position is received, the corresponding probability of the second event in the first position in the importance-urgency matrix may be determined as the new corresponding probability of the second event in the second position, and the corresponding probability of the second event in the second position in the importance-urgency matrix may be determined as the new corresponding probability of the second event in the first position. In other words, the intelligent device may interchange the probability of the second event in the first position and the probability of the second event in the second position before adjustment, and determine the interchanged probabilities as the new corresponding probability of the second event in the first position after adjustment and the new corresponding probability of the second event in the second position after adjustment. New probabilities of the second event in the other positions after adjustment are the same as the probabilities of the second event in the other positions before adjustment. After the new corresponding probabilities of the second event in the positions in the importance-urgency matrix are obtained, the second position corresponding to the new largest probability may be determined as the position corresponding to the event.

In a possible implementation, the method further includes: when the second event is a to-be-processed event, re-determining, based on importance and urgency that are corresponding to the second position in the importance-urgency matrix, a priority corresponding to the second event.

In the solution in this implementation of this application, as described above, after the at least one triggered event and the target task corresponding to each event are determined, the target task corresponding to each of the at least one event may be added to a current task queue, and after the target task is executed, the target task may be deleted from the current task queue. Based on this case, when a target task corresponding to the second event is in the current task queue, the second event may be determined as a to-be-processed event. In other words, the to-be-processed event may include an event being processed. In addition, the to-be-processed event may alternatively not include an event being processed.

When the second event is a to-be-processed event, the intelligent device may re-calculate, based on the foregoing method for determining a priority of an event, the priority corresponding to the second event. Further, the intelligent device may execute, based on the re-calculated priority, the target task corresponding to the second event. For a case in which the to-be-processed event includes an event being processed, when the re-calculated priority is decreased, execution of the target task corresponding to the event may be suspended, and a target task corresponding to an event having a higher priority is executed.

According to a second aspect, an apparatus for executing a task by an intelligent device is provided. The apparatus includes at least one module, and the at least one module is configured to implement the method for executing a task by an intelligent device in the first aspect.

According to a third aspect, an intelligent device is provided. The intelligent device includes a processor, a memory, and a sensor. The processor is configured to execute an instruction stored in the memory, and the processor implements, by executing the instruction, the method for executing a task by an intelligent device in the first aspect.

According to a fourth aspect, a computer readable storage medium is provided. The computer readable storage medium stores at least one instruction, at least one segment of program, a code set, or an instruction set. The at least one instruction, the at least one segment of program, the code set, or the instruction set is loaded and executed by a processor, to implement the method for executing a task by an intelligent device in the first aspect or any possible implementation of the first aspect.

Technical effects obtained in the second to the fourth aspects of the implementations of this application are similar to the technical effects obtained by using the technical means corresponding to the first aspect, and details are not described herein again.

Beneficial effects of the technical solutions provided in the implementations of this application are as follows:

In the implementations of this application, when the at least one piece of triggering information is detected, the at least one to-be-processed event corresponding to the at least one piece of triggering information is determined based on the at least one piece of triggering information, where the determined at least one event is different from each other. For each of the determined at least one event, the target task corresponding to the event is selected from the at least one task corresponding to the event. The target task corresponding to each event is executed. In this way, the robot combines the detected triggering information to determine events that are different from each other, so as to prevent a corresponding task from being executed twice for a same event corresponding to different triggering information, thereby preventing resource waste.

## BRIEF DESCRIPTION OF DRAWINGS

FIG. 1 is a schematic diagram of a system framework according to an implementation of this application;
FIG. 2 is a flowchart of a method for executing a task according to an implementation of this application;
FIG. 3(a) is a schematic diagram of determining an event according to an implementation of this application;
FIG. 3(b) is a schematic diagram of determining a target task according to an implementation of this application;
FIG. 4(a) is a schematic diagram of an event and a target task according to an implementation of this application;
FIG. 4(b) is a schematic diagram of an importance-urgency matrix according to an implementation of this application;
FIG. 5(a) is a schematic diagram of an event and a target task according to an implementation of this application;
FIG. 5(b) is a schematic diagram of a current task queue according to an implementation of this application;
FIG. 5(c) is a schematic diagram of a current task queue according to an implementation of this application;
FIG. 5(d) is a schematic diagram of a current task queue according to an implementation of this application;
FIG. 5(e) is a schematic diagram of a current task queue according to an implementation of this application;
FIG. 6 is a schematic structural diagram of an apparatus for executing a task according to an implementation of this application; and
FIG. 7 is a schematic structural diagram of an apparatus for executing a task according to an implementation of this application.

## DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

Implementations of this application provide a method for executing a task by an intelligent device. The method is performed by an intelligent device that can execute various types of tasks. The intelligent device may be a robot that can execute various types of tasks. The solutions are described in detail subsequently by using an example in which the intelligent device is a robot. Other cases are similar thereto, and are not described.

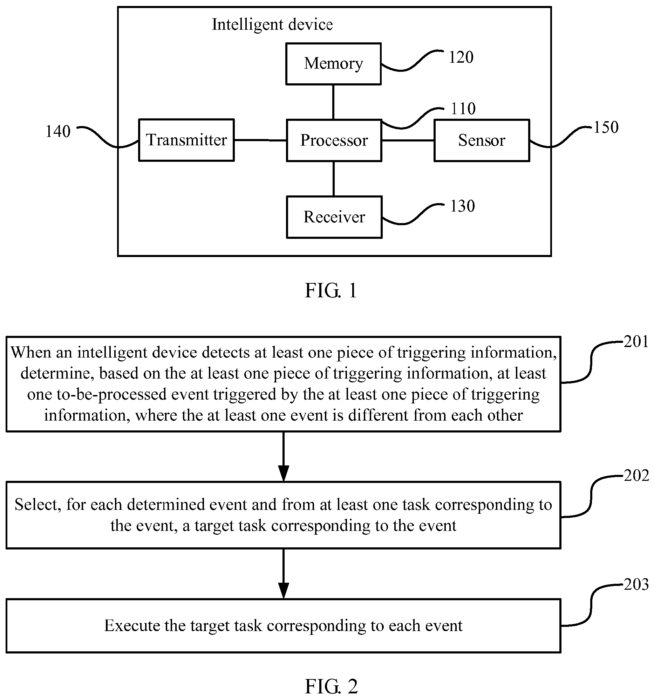

The intelligent device may include a processor 110 and a memory 120, and the processor 110 may be connected to the memory 120, as shown in FIG. 1. The processor 110 may include one or more processing units. The processor 110 may be a general purpose processor, including a central processing unit (Central Processing Unit, CPU for short), a network processor (Network Processor, NP for short), or the like, or may be a digital signal processor (DSP), an application-specific integrated circuit (ASIC), a field-programmable gate array (FPGA), another programmable logic device, or the like. Specifically, a program may include program code, and the program code includes a computer operation instruction. The intelligent device may further include the memory 120. The memory 120 may be configured to store a software program and a module, and the processor 110 reads the software program and the module that are stored in the memory 120, to execute a task. In addition, the intelligent device may further include a receiver 130 and a transmitter 140. The receiver 130 and the transmitter 140 may be separately connected to the processor 110, and the transmitter 140 and the receiver 130 may be collectively referred to as a transceiver. The transmitter 140 may be configured to send a message or data. The transmitter 140 may include but is not limited to at least one amplifier, a tuner, one or more oscillators, a coupler, an LNA (Low Noise Amplifier, low noise amplifier), a duplexer, and the like. In addition, the intelligent device may further include a sensor 150. There may be a plurality of sensors 150. The sensor 150 may be connected to the processor 110. The sensor 150 may be configured to detect triggering information.

The following describes, in detail with reference to specific implementations, a processing procedure shown in FIG. 2. Content may be as follows:

Step 201. When at least one piece of triggering information is detected, determine, based on the at least one piece of triggering information, at least one to-be-processed event triggered by the at least one piece of triggering information, where the determined at least one event is different from each other.

The triggering information may be information that is detected by a robot and that is used to trigger the robot to determine an event, or may be outside information detected by using a sensor. The event may be an event that can be recognized by the robot. To be specific, the event is an event that happens outside and that can be determined by the robot when the robot detects the triggering information.

During implementation, various types of components (for example, a photographing component and a voice obtaining component) may be disposed on the robot, and the robot may detect the triggering information by using the various types of components. Each time when the robot detects the at least one piece of triggering information, the robot may combine all detected triggering information to determine the at least one to-be-processed event that is different from each other and that is triggered by all the triggering information. The triggering information detected by the robot is not in one-to-one correspondence with the event, and different triggering information may trigger a same event. The detected at least one piece of triggering information may be detected at the same time, or may be detected within relatively short preset duration. For example, when a person falls on the ground, the person may utter voice information. In this case, the voice obtaining component of the robot may detect the voice information, perform speech recognition on the voice information, and detect triggering information "A person falls on the ground". In addition, the photographing component of the robot may further take an image that a person falls on the ground, and therefore generate triggering information "A person falls on the ground". After detecting the two pieces of triggering information, the robot may combine the two pieces of triggering information to determine that a to-be-processed event triggered by the two pieces of triggering information is "A person falls on the ground".

Optionally, the determined at least one event may be a remaining event after a repeated event is deleted. Correspondingly, a processing procedure of step 201 may be as follows: when the robot detects the at least one piece of triggering information, determining an event triggered by each piece of detected triggering information; and performing deduplication processing on all determined events, to obtain the at least one to-be-processed event triggered by the at least one piece of triggering information.

Specifically, the robot may pre-store a correspondence between triggering information and an event, and when detecting the at least one piece of triggering information, may determine, based on the correspondence, the event corresponding to each piece of triggering information. When the determined events include same events, the robot may delete a repeated event, so that the eventually determined events are different from each other. In addition, when the determined events include an event in a to-be-processed event list, the event may be deleted. To be specific, when detecting the at least one piece of triggering information, the robot may determine, based on the at least one piece of triggering information and the event in the to-be-processed event list, the at least one to-be-processed event triggered by the at least one piece of the triggering information. The determined at least one event is different from each other.

Optionally, the robot may determine, by using a classification model, the event triggered by each piece of triggering information. Correspondingly, a processing procedure may be as follows: when the intelligent device detects the at least one piece of triggering information, classifying each piece of detected triggering information based on a pre-trained classification model and each event in an event set, and determining the event corresponding to each piece of triggering information.

During implementation, when the at least one piece of triggering information is detected, the at least one event that is different from each other and that is triggered by the at least one piece of triggering information may be obtained by using the pre-trained classification model (for example, a neural network algorithm). The neural network algorithm may include a visible input neuron, one or more layers of hidden neurons, and a visible output neuron. Each visible input neuron may be a plurality of pieces of detected triggering information. The visible output neuron may be a triggered event. Connection between neurons is wireless mesh (mesh) interconnection, and may be specifically implemented by using a hidden Markov model (HMM) network or overlapping restricted Boltzmann machines (RBM).

In this implementation of this application, the neural network algorithm may serve as a classifier. In other words, each time when the robot detects the at least one piece of triggering information, the robot may use each of the at least one piece of triggering information as an input of the neural network algorithm (the classifier), classify each piece of triggering information by using the neural network algorithm (that is, by using a training network), and determine a category corresponding to the triggering information (that is, determine the event triggered by the triggering information). Each category in the neural network algorithm may be each event in a set of events that can be recognized by the robot, as shown in FIG. 3(a). After the category of each piece of triggering information is determined, a repeated event may be deleted, to obtain the event triggered by the at least one piece of triggering information. In addition, an amount of triggering information that can be recognized by the robot is far greater than a quantity of recognizable events. For example, each time when the robot detects triggering information "Light off", "Turn the light off", or "Turn off the light", the robot may determine that the triggered event is "Turn off the light".

In addition, the robot may include a plurality of working agents and a central processing unit. The central processing unit may communicate with the working agents. Each agent may be a unit that can execute a task relatively independently, and usually has an independent sensor, an independent computing unit, and related software. For example, the robot may include a visual working agent, a voice working agent, a communications working agent, and the like. In this application, the triggering information detected by the robot may be a message sent by each working agent. The message may include a message generation time point, a working agent identifier, a message generation position, and a message body (the message body may be a phrase formed by characters). After generating the message, each agent may send the message to the central processing unit, so that the central processing unit performs processing of step 201.

Step 202. Select, for each determined event and from at least one task corresponding to the event, a target task corresponding to the event.

The target task may be a task selected when the event is processed this time.

During implementation, the robot may store at least one task corresponding to each event in the event set, and each event in the event set is an event that can be recognized by the robot. In other words, each event may correspond to one or more processing manners (tasks), and different events may correspond to a same task. After the at least one triggered event is determined, the at least one triggered event may be added to the to-be-processed event list. In addition, for each of the at least one event, the robot may determine, from the pre-stored at least one task corresponding to each event in the event set, the at least one task corresponding to the event, and then may determine, from the at least one corresponding task, the target task corresponding to the event. The at least one task may be a processing manner that can be used for processing the event. For example, for an event "A person falls on the ground", a corresponding task may be dialing a preset phone number, making a video call, or the like. Specifically, the robot may randomly determine, from the at least one corresponding task and based on a preset randomization algorithm, the target task corresponding to the event, that is, determine a processing manner used for processing the event this time, as shown in FIG. 3 (b). A processing procedure of the step may be specifically implemented by using a Markov decision network. The triggered event may be used as an input of the Markov decision network, and the target task corresponding to each event is an output of the Markov decision network. The Markov decision network generally includes two categories of neurons, namely, a status neuron (reflecting arrangement and an activation status of the event set) and an action neuron (the action neuron may be in full connection, or may be in mesh connection).

Optionally, each task corresponding to each event may correspond to a selection probability. Further, the robot selects, based on a selection probability, the task corresponding to the event. Correspondingly, a processing procedure of step 202 may be as follows: for each of the determined at least one event, selecting, from the at least one task corresponding to the event and based on the selection probability of each of the at least one task corresponding to the event, the target task corresponding to the event.

During implementation, in addition to the at least one task corresponding to each event in the event set, the robot may further store the selection probability corresponding to each task, that is, may store a correspondence between an event, a task, and a selection probability. Different events may correspond to a same task. When a same task corresponds to different events, corresponding selection probabilities may be the same or may be different, as shown in Table 1. In addition, a sum of selection probabilities of all events corresponding to each task may further be 1.

**Table 1**

| Event | Task | Selection probability |
|---|---|---|
| Event 1 | Task a | 0.9 |
| | Task b | 0.1 |
| Event 2 | Task c | 0.8 |
| | Task a | 0.1 |

(continued)

| Event | Task | Selection probability |
|---|---|---|
| Event 3 | Task d | 0.6 |
| | Task b | 0.9 |

After determining the at least one triggered event, for each of the at least one event, the robot may determine, based on the correspondence, the at least one task corresponding to the event, and then may randomly select, from a plurality of tasks and based on the selection probability corresponding to each determined task, the target task corresponding to the event. The selection probability represents a possibility that a corresponding task is selected. For example, the at least one task corresponding to the event 1 is a task a and a task b, a selection probability corresponding to the task a is 0.9, and a selection probability corresponding to the task b is 0.1. Then, the robot may determine a target task in a manner of generating a random number from 1 to 10. To be specific, when the generated random number is one of 1 to 9, the task a may be determined as the target task, and when the generated random number is 10, the task b may be determined as the target task.

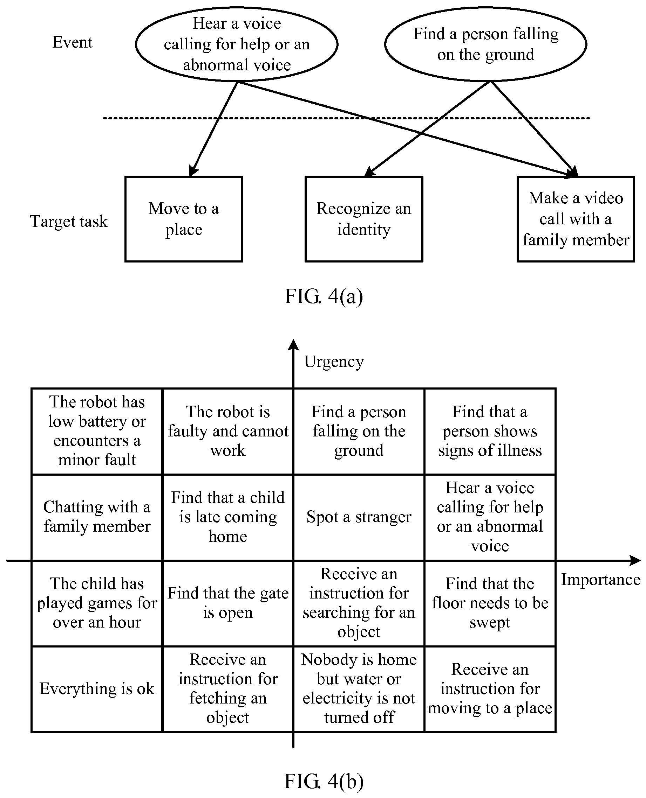

In addition, when the event is triggered, if the determined target task definitely includes a task, a selection probability of the task corresponding to the event is 1. To be specific, in this case, if the event is triggered, the target task that is determined by the robot and that corresponds to the event certainly includes the task. For example, a target task corresponding to an event "Hear a voice calling for help or an abnormal voice" may include "Move to a place" and "Make a video call with a family member", and the target task corresponding to the event "Find a person falling on the ground" may include "Recognize an identity" and "Make a video call with a family member", as shown in FIG. 4(a).

Optionally, when using the robot, the user may adjust, through manual intervention, a selection probability of each task corresponding to an event. Correspondingly, a processing procedure may be as follows: when a satisfaction degree value entered for execution of a first task of a target task corresponding to a first event is received, adjusting, based on the entered satisfaction degree value, a selection probability of the first task corresponding to the first event.

The first event may be any one of events that have been processed by the robot.

During implementation, a human-computer interaction interface (a visible graphical interface and a touch manner) may be disposed on the robot, and a user may make manual intervention by using the human-computer interaction interface. Specifically, each time after the robot executes the target task corresponding to the triggered event (which may be referred to as the first event), that is, after the robot executes a target task corresponding to an event or when the robot executes a target task corresponding to an event, the user may enter, based on a satisfaction degree of the user, a satisfaction degree value for current execution of the first task of the target task corresponding to the event, and the robot may receive the satisfaction degree value (which may be represented by s, and s may be a value greater than 0 and less than 1) that is entered by the user for execution of the first task corresponding to the first event by the robot. In this case, the robot may adjust the selection probability of the first task corresponding to the first event. In addition, the robot may further adjust a selection probability of an event other than the first event of all events corresponding to the first task. Specifically, after obtaining the satisfaction degree value s entered by the user, the robot may calculate, according to the formula (1), an excitation value $\Delta\Omega_a$ of a selection probability of the first event (which may be represented by a) corresponding to the first task, calculate, according to the formula (2), a new selection probability of the first event a corresponding to the first task, and calculate, according to the formula (3), a new selection probability $\Omega_i^{'}$ of another event corresponding to the first task:

$$\Delta\Omega_a = \Omega_a * (s - 0.5)/0.5 \qquad (1)$$

$$\Omega_a^{'} = \Omega_a + \Delta\Omega_a \qquad (2)$$

$$\Omega_i^{'} = \Omega_i - \Delta\Omega_a/(z-1) \quad i \neq a \qquad (3)$$

where i may be any integer between 1 and z, z is a quantity of all events corresponding to the first task, $\Omega_a$ represents a selection probability of the event a corresponding to the first task before adjustment, and $\Omega_i$ represents a selection probability of an event i corresponding to the first task before adjustment.

Step 203. Execute the target task corresponding to each event.

During implementation, after determining the target task corresponding to each event, the robot may execute the target task corresponding to each event. The robot may include a plurality of functional modules, and each functional module may execute a task. To be specific, the robot may separately execute, by using the plurality of functional modules, each task in the target task corresponding to each event. In addition, after determining the target task corresponding to each event, the robot may add the target task of each event to a current task queue, and each time after a target task is executed, the robot may delete the target task from the current task queue, and delete an event corresponding to the target task from the to-be-processed event list. If the current task queue includes a target task that is determined previously and that corresponds to the event, adding a target task that is determined this time and that corresponds to the triggered event to the current task queue is equivalent to updating the current task queue. A list of all tasks that can be executed by the robot may include: system self-test, positioning, map construction, moving to a place, recognizing a family member, recognizing an identity, recognizing an object, recognizing a gesture, audio (voice or sound) understanding and synthesis, autonomous charging, searching for an object, fetching an object, sweeping the floor, making a video call with a person, and sending a short message service message to a person.

In addition, when the user uses the robot, a new functional module may be added to the robot (for example, corresponding hardware and a corresponding functional program may be added), and for a task that can be implemented by the newly added functional module, a corresponding selection probability may be set for a corresponding event. When using the robot, the user may further make manual intervention, so that the robot adjusts, based on the foregoing method, a selection probability that is of the task that can be implemented by the newly added functional module and that is corresponding to the corresponding event.

Optionally, after determining the at least one triggered event, the robot may determine a priority of processing each event. Correspondingly, a processing procedure may be as follows: determining, based on pre-stored importance and urgency that are corresponding to each event in the event set, importance and urgency that are corresponding to each of the at least one event; and determining, for each event, the priority of the event based on the determined importance and urgency that are corresponding to the event. Correspondingly, a processing procedure of step 203 may be as follows: executing, based on the priority of each event in descending order of priorities, the target task corresponding to each event.

During implementation, the robot may pre-store the importance and urgency that are corresponding to each event in the event set. After determining the at least one triggered event, the robot may determine, from the pre-stored importance and urgency that are corresponding to events in the event set, the importance and urgency that are corresponding to each of the at least one event, and then may determine, for each event, the priority of the event based on the determined importance and urgency that are corresponding to the event. For example, a sum of the importance and urgency that are corresponding to the event may be calculated, and the calculated sum may be used as the priority of the event. After determining the priority of each event, the robot may execute, in descending order of priorities, the target task corresponding to each event.

Optionally, during priority calculation, an expected cost of current execution of the target task corresponding to the event may be considered. Correspondingly, a processing procedure may be as follows: for each event, obtaining an actual cost and an expected cost of previous execution of a task corresponding to the event; determining, based on the actual cost and the expected cost of the previous execution of the task corresponding to the event, an expected cost required for current execution of the target task corresponding to the event; and determining the priority of the event based on the determined importance and urgency that are corresponding to the event and the determined expected cost required for the current execution of the target task corresponding to the event.

During implementation, each time after the robot executes a task corresponding to each event in the event set, that is, each time after the robot processes the event, the robot may record an actual cost of current execution of the task corresponding to the event, and calculate an expected cost required for next execution of a task corresponding to the event. The actual cost may be energy (for example, electric power or central processing unit usage) or time consumed for executing the task corresponding to the event, or may be a combination of energy and time.

An event a is used as an example to describe a processing procedure of determining a priority of the event a. The event a is any event in the event set. Specifically, the robot may preset an expected cost $T_{a,1} = 1$ of first processing of the event a, and the robot may calculate, according to the formula (4), an expected cost of each execution of a task corresponding to the event a, where i represents that the event a is processed for an $i^{th}$ time:

$$T_{a,i+1} = pT_{a,i} + (1-p)\Delta w_{a,i}\Delta t_{a,i} \quad (4)$$

where $T_{a,i+1}$ represents an expected cost required for $(i+1)^{th}$-time processing of the event a, i is a positive integer greater than or equal to 1, $T_{a,i}$ represents an expected cost required for $i^{th}$-time processing of the event a, p is a weighted value, and may be a value between 0 and 1 (for example, may be a value less than 0.5), $\Delta w_{a,i}$ and $\Delta t_{a,i}$ respectively represent energy and time actually consumed for the $i^{th}$-time processing of the event a, and $\Delta w_{a,i}\Delta t_{a,i}$ represents an actual cost of the $i^{th}$-time processing of the event a.

After an expected cost required for $i^{th}$-time execution of the task corresponding to the event a is determined according to the formula (4), and importance (which may be represented by $\Phi_a$) and urgency (which may be represented

by $\Psi_a$) that correspond to the event a are obtained, when the event is triggered for the $i^{th}$ time, a priority $\Theta_a$ of current execution of the task corresponding to the event a may be calculated according to the formula (5):

$$\Theta_a = \Phi_a + \Psi_a / T_{a,i} \quad (5)$$

After determining at least one currently-triggered event, for each event, the robot may obtain the actual cost and the expected cost of the previous execution of the task corresponding to the event, and then may determine, according to the formula (4), the expected cost required for the current execution of the target task corresponding to the event. After obtaining the expected cost and corresponding importance and urgency, the robot may determine the priority of the event according to the formula (5).

Optionally, the importance and urgency that are corresponding to each event in the event set may be obtained by using an importance-urgency matrix. Correspondingly, a processing procedure of determining the importance and urgency of each event may be as follows: determining, based on the pre-stored importance-urgency matrix and an event corresponding to each position in the importance-urgency matrix, the importance and urgency that are corresponding to each of the at least one event, where each position in the importance-urgency matrix represents importance and urgency of the event corresponding to the position.

During implementation, the robot may pre-store the importance-urgency matrix. Positions in the importance-urgency matrix correspond to different events, and each position represents the importance and urgency of the event corresponding to the position, as shown in FIG. 4(b). The matrix may be referred to as an Eisenhower Decision Matrix (Eisenhower Decision Matrix, EDM). After determining the at least one event, the robot may determine, from the importance-urgency matrix, importance and urgency that are corresponding to a position of each of the at least one event in the importance-urgency matrix.

Optionally, the position of each event in the importance-urgency matrix is determined by using corresponding probabilities of the event in positions. Correspondingly, a processing procedure may be as follows: for each event in the event set, determining, based on pre-stored corresponding probabilities of the event in the positions in the importance-urgency matrix, a position corresponding to a largest probability as the position corresponding to the event.

During implementation, the robot may preset the corresponding probabilities of each event in the positions in the importance-urgency matrix. The probability may be a value having a preset quantity of digits, and a sum of the corresponding probabilities of each event in the positions in the importance-urgency matrix is 1. For each event in the event set, when determining the position of each event in the importance-urgency matrix, the robot may determine the largest probability from the corresponding probabilities of the event in the positions in the importance-urgency matrix, and then may determine the position corresponding to the largest probability as the corresponding position of the event in the importance-urgency matrix.

Specifically, the importance-urgency matrix may be an m*n EDM, and a quantity of the events in the event set is m*n. For the event a, assuming that a probability of the event a in a position (i, j) in EDM is $P_{ij}(a)$ ($i \in [0,m), j \in [0,n)$), and a sum of corresponding probabilities of the event a in the positions in the importance-urgency matrix is 1, a normalization condition is satisfied:

$$1 = \sum_{j=0}^{n>j} \sum_{i=0}^{m>i} P_{ij}(a)$$

Assuming that an actual position of the event a in the importance-urgency matrix is (i',j'), a corresponding probability of the event a in the position is largest, and satisfies the following formula:

$$P_{i'j'}(a) = \max \left\{ P_{ij}(a) \right\}$$

Optionally, the user may adjust, by using the human-machine interaction interface of the robot, the corresponding position of each event in the event set in the importance-urgency matrix. Each time when the user adjusts the corresponding position of the event in the importance-urgency matrix, the robot may correspondingly adjust the corresponding probabilities of the event in the positions in the importance-urgency matrix. Based on different probability adjustment methods, there may be a variety of specific processing manners, and several feasible processing manners are provided below.

Manner 1: When an instruction for adjusting a position corresponding to a second event from a first position to a second position is received, an excitation factor corresponding to each position in the importance-urgency matrix for the adjustment instruction is obtained, where an excitation factor corresponding to the second position is largest, and an excitation factor corresponding to the first position is smallest. New corresponding probabilities of the second event in the positions in the importance-urgency matrix are calculated based on the obtained excitation factor corresponding to each position in the importance-urgency matrix and corresponding probabilities of the second event in the positions in the importance-urgency matrix. The second position corresponding to a new largest probability is determined as the position corresponding to the event based on the new corresponding probabilities of the second event in the positions in the importance-urgency matrix.

The second event may be any event in the event set.

During implementation, the robot may pre-store the excitation factor $K_{ij}$ corresponding to each position in the importance-urgency matrix. For different adjustment instructions, excitation factors corresponding to each position in the importance-urgency matrix are different. For an event whose position is adjusted, an excitation factor corresponding to a position after adjustment is largest, an excitation factor corresponding to a position before adjustment is smallest, and an excitation factor corresponding to another position is between the largest and the smallest. When the user adjusts the position corresponding to the second event from the first position to the second position, the robot may receive the instruction for adjusting the position corresponding to the second event from the first position to the second position. In this case, the robot may obtain the excitation factor corresponding to each position in the importance-urgency matrix for the adjustment instruction, and then may adjust, by using the excitation factor corresponding to each position, a corresponding probability of the second event in each position in the importance-urgency matrix, to obtain the new corresponding probabilities of the second event in the positions in the importance-urgency matrix (that is, obtain the corresponding probabilities of the second event in the positions in the importance-urgency matrix after position adjustment). After obtaining the new corresponding probabilities of the second event in the positions in the importance-urgency matrix, the robot may determine, based on the new corresponding probabilities of the second event in the positions in the importance-urgency matrix, the second position corresponding to the new largest probability as the position corresponding to the event.

Specifically, it is assumed that the event a is the second event, the first position is $(i',j')$, the second position is $(i'',j'')$, the corresponding probability of the second event in each position in the importance-urgency matrix before adjustment is $P_{ij}(a)$, the corresponding probability of the second event in each position in the importance-urgency matrix after adjustment is $P'_{ij}(a)$, and the excitation factor is $K_{ij}$. The robot may calculate, according to the formula (6), the new corresponding probabilities of the second event a in the positions in the importance-urgency matrix:

$$P'_{ij}(a) = K_{ij} * P_{ij}(a) / \sum_{i=0, j=0}^{m>i, j>n} (K_{ij} * P_{ij}(a)) \qquad (6)$$

It may be learned that $P'_{ij}(a)$ is normalized. In addition, a value of $K_{ij}$ may be shown as follows:

$K_{ij} = 0.8$ (when i = i', j = j')

$K_{ij} = 1.2$ (when i = i'', j = j'')

$K_{ij} = 0.95$ (another position)

It may be learned that a new corresponding probability of the second event in the second position in the importance-urgency matrix is largest. To be specific, after adjustment by the user, the second position adjusted by the user is the corresponding position of the second event in the importance-urgency matrix.

Manner 2: When an instruction for adjusting a position corresponding to a second event from a first position to a second position is received, a corresponding probability of the second event in the first position in the importance-urgency matrix is determined as a new corresponding probability of the second event in the second position, and a corresponding probability of the second event in the second position in the importance-urgency matrix is determined as a new corresponding probability of the second event in the first position. The second position corresponding to a new largest probability is determined as the position corresponding to the event based on new corresponding probabilities of the second event in the positions in the importance-urgency matrix.

During implementation, when receiving the instruction for adjusting the position corresponding to the second event from the first position to the second position, the robot may adjust only the corresponding probabilities of the second event in the first position and the second position, and does not adjust probabilities corresponding to the other positions. Specifically, when the instruction for adjusting the position corresponding to the second event from the first position to the second position is received, the corresponding probability of the second event in the first position in the importance-urgency matrix may be determined as the new corresponding probability of the second event in the second position, and the corresponding probability of the second event in the second position in the importance-urgency matrix may be determined as the new corresponding probability of the second event in the first position. In other words, the robot may interchange the probability of the second event in the first position and the probability of the second event in the second position before adjustment, and determine the interchanged probabilities as the new corresponding probability of the second event in the first position after adjustment and the new corresponding probability of the second event in the second position after adjustment. New probabilities of the second event in the other positions after adjustment are the same as the probabilities of the second event in the other positions before adjustment. After the new corresponding probabilities of the second event in the positions in the importance-urgency matrix are obtained, the second position corresponding to the new largest probability may be determined as the position corresponding to the event.

The new corresponding probabilities of the second event in the positions in the importance-urgency matrix may be calculated according to the formula (6), and a definition of the excitation factor $K_{ij}$ corresponding to each position is different from a definition in manner 1, and may be as follows:

$$K_{ij} = P_{i''j''} (a)/P_{i'j'} (a) \qquad \text{(when } i = i', j = j')$$
$$K_{ij} = P_{i'j'} (a)/ P_{i''j''} (a) \qquad \text{(when } i = i'', j = j'')$$
$$K_{ij} = 0.95 \qquad \text{(another position)}$$

It may be learned that the new corresponding probability of the second event in the second position in the importance-urgency matrix is largest. To be specific, after adjustment by the user, the second position adjusted by the user is the corresponding position of the second event in the importance-urgency matrix.

In addition, that the user adjusts the corresponding position of the second event in the importance-urgency matrix is equivalent to that positions of two events in the importance-urgency matrix are interchanged. In other words, when the position corresponding to the second event is adjusted from the first position to the second position, a position corresponding to a third event whose original corresponding position is the second position is adjusted from the second position to the first position. In other words, after the user adjusts the position corresponding to the second event, when re-determining, in manner 1 or manner 2, the position corresponding to the second event, the robot may further re-determine, in manner 1 or manner 2, the position corresponding to the third event. A specific implementation procedure is similar to that of the second event, and details are not described herein again.

Optionally, when the second event for which the corresponding position is adjusted is a to-be-processed event, the robot may re-calculate a priority of the second event. Correspondingly, a specific processing procedure may be as follows: when the second event is a to-be-processed event, re-determining, based on importance and urgency that are corresponding to the second position in the importance-urgency matrix, the priority corresponding to the second event.

During implementation, as described above, after the at least one triggered event and the target task corresponding to each event are determined, the target task corresponding to each of the at least one event may be added to a current task queue, and after the target task is executed, the target task may be deleted from the current task queue. Based on this case, when a target task corresponding to the second event is in the current task queue, the second event may be determined as a to-be-processed event. In other words, the to-be-processed event may include an event being processed. In addition, the to-be-processed event may alternatively not include an event being processed.

When the second event is a to-be-processed event, the robot may re-calculate, based on the foregoing method for determining a priority of an event, the priority corresponding to the second event. Further, the robot may execute, based on the re-calculated priority, the target task corresponding to the second event. For a case in which the to-be-processed event includes an event being processed, when the re-calculated priority is decreased, execution of the target task corresponding to the event may be suspended, and a target task corresponding to an event having a higher priority is executed.

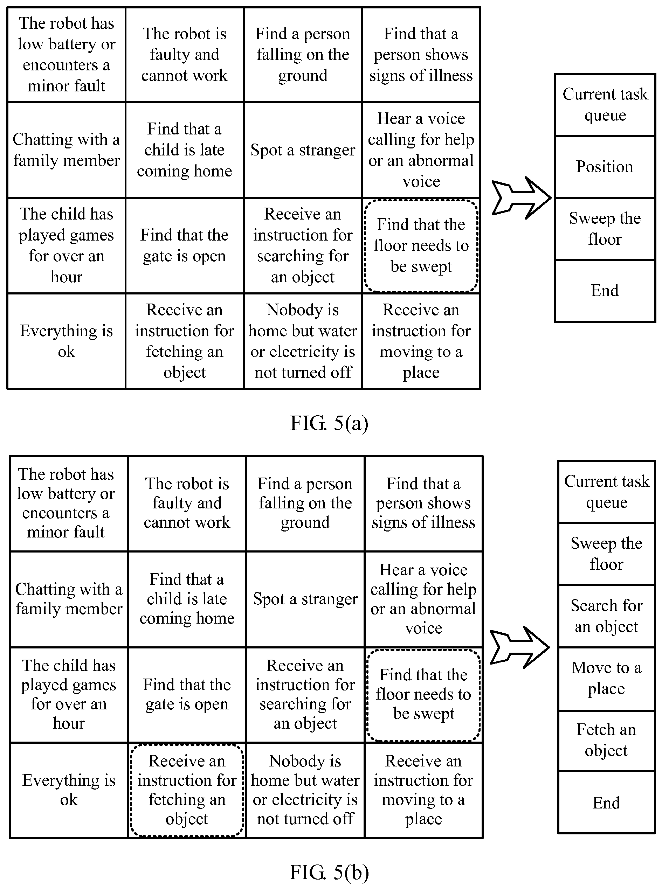

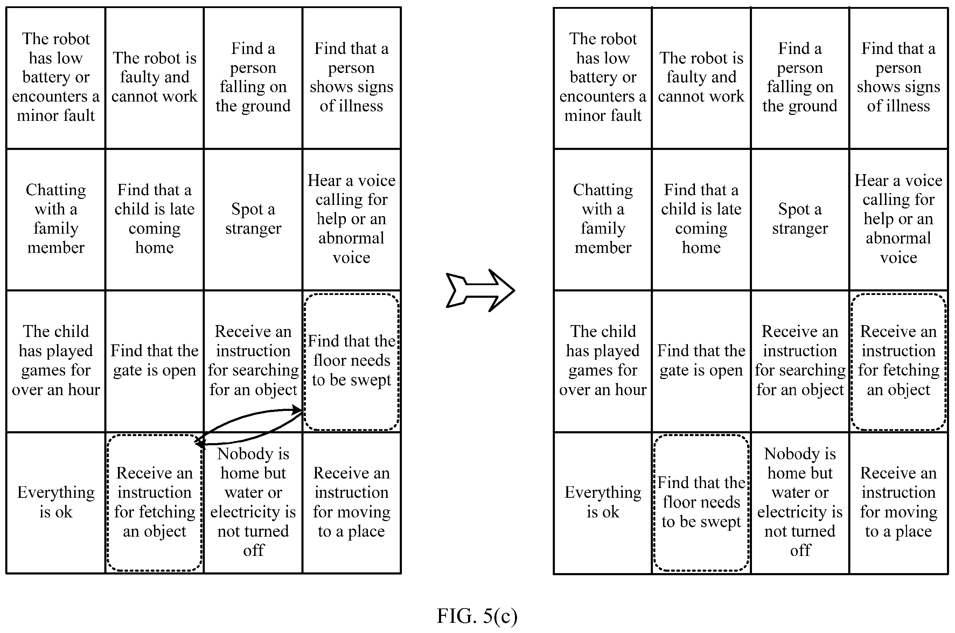

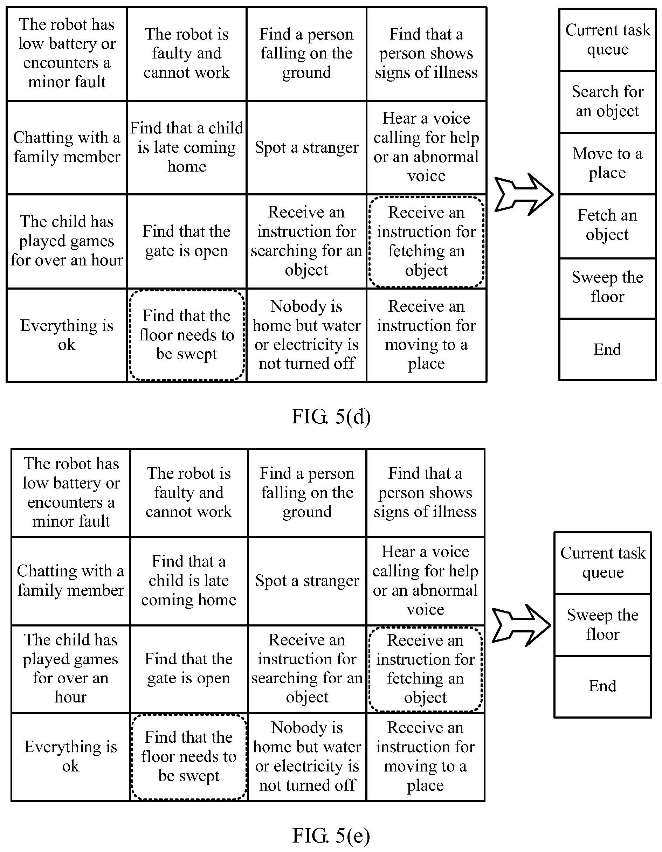

For example, the robot detects, by using a component, triggering information "There is dirt on the ground", determines that an event triggered by the triggering information is "Find that the floor needs to be swept", and then may add a target task corresponding to the event to a current task queue, as shown in FIG. 5(a). In this case, the robot further detects, by using another component, triggering information "Bring me medicine", determines that an event triggered by the triggering information is "An object needs to be fetched", and then may add a target task corresponding to the event to the current task queue, as shown in FIG. 5(b). It is calculated, based on importance and urgency that are corresponding to the two events, that a priority of the event "Find that the floor needs to be swept" is higher than that of the event "An object needs to be fetched". When the user is not satisfied with the priorities, corresponding positions of the two events in the importance-urgency matrix may be adjusted. In other words, the importance and urgency of the two events may be adjusted, as shown in FIG. 5(c). Correspondingly, the robot may re-calculate the priorities of the two events (to learn that the priority of the event "An object needs to be fetched" is higher than that of the event "Find that the floor needs to be swept"), and change a sequence of the target tasks corresponding to the two events in the current task queue, as shown in FIG. 5(d). Eventually, the robot may first execute the target task corresponding to the event "An object needs to be fetched", and after completing the execution, may delete the target task corresponding to the event "An object needs to be fetched" from the current task queue, as shown in FIG. 5(e), and continue to execute the target task corresponding to the event "Find that the floor needs to be swept".

In this implementation of this application, when the at least one piece of triggering information is detected, the at least one to-be-processed event corresponding to the at least one piece of triggering information is determined based on the at least one piece of triggering information, where the determined at least one event is different from each other. For each of the determined at least one event, the target task corresponding to the event is selected from the at least one task corresponding to the event. The target task corresponding to each event is executed. In this way, the robot combines the detected triggering information to determine events that are different from each other, so as to prevent a corresponding task from being executed twice for a same event corresponding to different triggering information, thereby preventing resource waste.

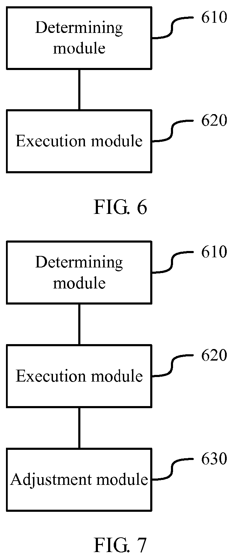

Based on a same technical idea, an implementation of this application further provides an apparatus for executing a task by an intelligent device. As shown in FIG. 6, the apparatus includes a determining module 610 and an execution module 620.

The determining module 610 is configured to: when at least one piece of triggering information is detected, determine, based on the at least one piece of triggering information, at least one to-be-processed event triggered by the at least one piece of triggering information, where the determined at least one event is different from each other, the triggering information is outside information detected by an intelligent device by using a sensor, and the event is an event that happens outside and that is determinable for the intelligent device when the intelligent device detects the triggering information. A determining function in step 201 and other implicit steps may be specifically implemented.

The determining module 610 is further configured to select, for each determined event and from at least one task corresponding to the event, a target task corresponding to the event, where the task is a processing manner available to the intelligent device for the event that happens outside. A determining function in step 202 and other implicit steps may be specifically implemented.

The execution module 620 is configured to execute the target task corresponding to each event. An execution function in step 203 and other implicit steps may be specifically implemented.

The determining module 610 is configured to:

when the intelligent device detects the at least one piece of triggering information, determine an event triggered by each piece of detected triggering information; and
perform deduplication processing on all determined events, to obtain the at least one to-be-processed event triggered by the at least one piece of triggering information.

The determining module 610 is configured to:
when the intelligent device detects the at least one piece of triggering information, classify each piece of detected triggering information based on a pre-trained classification model and each event in an event set, and determine the event corresponding to each piece of triggering information.

Optionally, the determining module 610 is configured to:
for each determined event, select, from the at least one task corresponding to the event and based on a selection probability of each of the at least one task corresponding to the event, the target task corresponding to the event.

Optionally, as shown in FIG. 7, the apparatus further includes:
an adjustment module 630, configured to: when a satisfaction degree value entered for execution of a first task of a target task corresponding to a first event is received, adjust, based on the entered satisfaction degree value, a selection probability of the first task corresponding to the first event.

Optionally, the determining module 610 is further configured to:

determine, based on pre-stored importance and urgency that are corresponding to each event in an event set, importance and urgency that are corresponding to each of the at least one event; and
determine, for each event, a priority of the event based on the determined importance and urgency that are corresponding to the event; and
the execution module 620 is configured to:
execute, based on the priority of each event in descending order of priorities, the target task corresponding to each event.

Optionally, the determining module 610 is configured to:

for each event, obtain an actual cost and an expected cost of previous execution of a task corresponding to the event;
determine, based on the actual cost and the expected cost of the previous execution of the task corresponding to the event, an expected cost required for current execution of the target task corresponding to the event; and

determine the priority of the event based on the determined importance and urgency that are corresponding to the event and the determined expected cost required for the current execution of the target task corresponding to the event.

Optionally, the determining module 610 is configured to:
determine, based on a pre-stored importance-urgency matrix and an event corresponding to each position in the importance-urgency matrix, the importance and urgency that are corresponding to each of the at least one event, where each position in the importance-urgency matrix represents importance and urgency of the event corresponding to the position.

Optionally, the determining module 610 is further configured to:
for each event in the event set, determine, based on pre-stored corresponding probabilities of the event in positions in the importance-urgency matrix, a position corresponding to a largest probability as a position corresponding to the event.

Optionally, the determining module 610 is further configured to:

when an instruction for adjusting a position corresponding to a second event from a first position to a second position is received, obtain an excitation factor corresponding to each position in an importance-urgency matrix for the adjustment instruction, where an excitation factor corresponding to the second position is largest, and an excitation factor corresponding to the first position is smallest;

calculate, based on the obtained excitation factor corresponding to each position in the importance-urgency matrix and corresponding probabilities of the second event in the positions in the importance-urgency matrix, new corresponding probabilities of the second event in the positions in the importance-urgency matrix; and

determine, based on the new corresponding probabilities of the second event in the positions in the importance-urgency matrix, the second position corresponding to a new largest probability as the position corresponding to the event.

Optionally, the determining module 610 is further configured to:

when an instruction for adjusting a position corresponding to a second event from a first position to a second position is received, determine a corresponding probability of the second event in the first position in an importance-urgency matrix as a new corresponding probability of the second event in the second position, and determine a corresponding probability of the second event in the second position in the importance-urgency matrix as a new corresponding probability of the second event in the first position; and

determine, based on new corresponding probabilities of the second event in positions in the importance-urgency matrix, the second position corresponding to a new largest probability as the position corresponding to the event.

Optionally, the determining module 610 is further configured to:
when the second event is a to-be-processed event, re-determine, based on importance and urgency that are corresponding to the second position in the importance-urgency matrix, a priority corresponding to the second event.

It should be noted that the determining module 610, the execution module 620, and the adjustment module 630 may be implemented by a processor, or may be implemented by a processor along with a memory, or may be implemented by a processor executing a program instruction in a memory.

In this implementation of this application, when the at least one piece of triggering information is detected, the at least one to-be-processed event corresponding to the at least one piece of triggering information is determined based on the at least one piece of triggering information, where the determined at least one event is different from each other. For each of the determined at least one event, the target task corresponding to the event is selected from the at least one task corresponding to the event. The target task corresponding to each event is executed. In this way, a robot combines detected triggering information to determine events that are different from each other, so as to prevent a corresponding task from being executed twice for a same event corresponding to different triggering information, thereby preventing resource waste.

It should be noted that when the apparatus for executing a task provided in the foregoing implementation executes a task, only division of the foregoing functional modules is used as an example for description. In an actual application, the foregoing functions may be allocated to different functional modules for implementation according to needs. In other words, an inner structure of the intelligent device may be divided into different functional modules, to implement all or some functions described above. In addition, the apparatus for executing a task provided in the foregoing implementation and the implementation of the method for executing a task belong to a same idea. For a specific implementation process, refer to the method implementation, and details are not described herein again.

The foregoing implementations may be implemented completely or partially by software, hardware, firmware, or any combination thereof. When the foregoing implementations are implemented by software, the foregoing implementations may be completely or partially implemented in a form of a computer program product. The computer program product includes one or more computer instructions. When an intelligent device loads and executes the computer instruction, procedures or functions described in the implementations of this application are completely or partially generated. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial optical cable, an optical fiber, or a digital subscriber line (DSL)) or wireless (for example, infrared, radio, or microwave) manner. The computer-readable storage medium may be any available medium accessible by the intelligent device, or a data storage device, such as a server or a data center, integrating one or more available mediums. The available medium may be a magnetic medium (for example, a floppy disk, a hard disk, or a magnetic tape), an optical medium (for example, a digital versatile disc (DVD)), or a semiconductor medium (for example, a solid-state drive).

The scope of protection shall be defined by the appended claims.

**Claims**

1. A method for executing a task by an intelligent device, wherein the intelligent device comprises a plurality of sensor components, wherein the plurality of sensor components includes at least a first sensor component of a first type and a second sensor component of a second type, each sensor component detects a piece of triggering information, wherein the triggering information is outside information detected by the intelligent device by using the sensor components, wherein the pieces of triggering information respectively detected by the first and the second sensor components are of different types, wherein the method comprises:

   when the intelligent device detects (201)
   a first piece of triggering information detected by the first sensor component and further detects a second piece of triggering information detected by the second sensor component at the same time as that of detecting the first piece of triggering information,
   classifying each piece of detected triggering information based on a pre-trained classification model and each event in an event set, and determining an event corresponding to each piece of triggering information, wherein the event is an event that happens outside and that is determinable for the intelligent device when the intelligent device detects the triggering information;
   performing deduplication processing on all determined events to obtain an event list including at least one to-be-processed event triggered by the pieces of triggering information, wherein the deduplication processing comprises deleting repeated events such that when the event list includes multiple to-be-processed events, each event in the event list is different from each other;
   selecting (202), for each determined to-be-processed event and from at least one task corresponding to the event, a target task corresponding to the event, wherein the task is a processing manner available to the intelligent device for the event that happens outside; and
   executing (203) the target task corresponding to each event.

2. The method according to claim 1, wherein the selecting, for each determined event and from at least one task corresponding to the event, a target task corresponding to the event comprises:
   for each determined event, selecting the target task corresponding to the event, from the at least one task corresponding to the event and based on a selection probability of each of the at least one task corresponding to the event.

3. The method according to claim 2, wherein the method further comprises:
   when a satisfaction degree value entered for execution of a first task of a target task corresponding to a first event is received, adjusting, based on the entered satisfaction degree value, a selection probability of the first task corresponding to the first event.

4. The method according to any one of claims 1 to 3, wherein the method further comprises:

   determining, based on pre-stored importance and urgency that are corresponding to each event in the event set, importance and urgency that are corresponding to each of the at least one event; and
   determining, for each event, a priority of the event based on the determined importance and urgency that are corresponding to the event, wherein
   the executing the target task corresponding to each event comprises:

executing, based on the priority of each event in descending order of priorities, the target task corresponding to each event.

5. The method according to claim 4, wherein the determining, for each event, a priority of the event based on the determined importance and urgency that are corresponding to the event comprises:

for each event, obtaining an actual cost and an expected cost of previous execution of a task corresponding to the event;

determining, based on the actual cost and the expected cost of the previous execution of the task corresponding to the event, an expected cost required for current execution of the target task corresponding to the event; and

determining the priority of the event based on the determined importance and urgency that are corresponding to the event and the determined expected cost required for the current execution of the target task corresponding to the event.

6. The method according to claim 4, wherein the determining, based on pre-stored importance and urgency that are corresponding to each event in the event set, importance and urgency that are corresponding to each of the at least one event comprises:

determining, based on a pre-stored importance-urgency matrix and an event corresponding to each position in the importance-urgency matrix, the importance and urgency that are corresponding to each of the at least one event, wherein each position in the importance-urgency matrix represents importance and urgency of the event corresponding to the position.

7. The method according to claim 6, wherein the method further comprises:

for each event in the event set, determining, based on pre-stored corresponding probabilities of the event in positions in the importance-urgency matrix, a position corresponding to a largest probability as a position corresponding to the event.

8. The method according to claim 7, wherein the method further comprises:

when an instruction for adjusting a position corresponding to a second event from a first position to a second position is received, obtaining an excitation factor corresponding to each position in the importance-urgency matrix for the adjustment instruction, wherein an excitation factor corresponding to the second position is largest, and an excitation factor corresponding to the first position is smallest;

calculating, based on the obtained excitation factor corresponding to each position in the importance-urgency matrix and corresponding probabilities of the second event in the positions in the importance-urgency matrix, new corresponding probabilities of the second event in the positions in the importance-urgency matrix; and

determining, based on the new corresponding probabilities of the second event in the positions in the importance-urgency matrix, the second position corresponding to a new largest probability as the position corresponding to the event.

9. The method according to claim 7, wherein the method further comprises:

when an instruction for adjusting a position corresponding to a second event from a first position to a second position is received, determining a corresponding probability of the second event in the first position in the importance-urgency matrix as a new corresponding probability of the second event in the second position, and determining a corresponding probability of the second event in the second position in the importance-urgency matrix as a new corresponding probability of the second event in the first position; and

determining, based on new corresponding probabilities of the second event in the positions in the importance-urgency matrix, the second position corresponding to a new largest probability as the position corresponding to the event.

10. The method according to claim 8 or 9, wherein the method further comprises:

when the second event is a to-be-processed event, re-determining, based on importance and urgency that are corresponding to the second position in the importance-urgency matrix, a priority corresponding to the second event.

11. An apparatus for executing a task by an intelligent device, wherein the intelligent device comprises a processor (110), a sensor (150), and a memory (120), wherein the processor is configured to execute and instruction stored in the memory, and wherein the intelligent device comprises a plurality of sensor components, wherein the plurality of sensor components includes at least a first sensor component of a first type and a second sensor component of a second type, each sensor component detects a piece of triggering information, wherein the triggering information is outside information detected by the intelligent device by using the sensor components, wherein the pieces of triggering information respectively detected by the first and the second sensor components are of different types, wherein the apparatus comprises:

a determining module, configured for:

when the intelligent device detects a first piece of triggering information detected by the first sensor component and further detects a second piece of triggering information detected by the second sensor component at the same time as that of detecting the first piece of triggering information,

classifying each piece of detected triggering information based on a pre-trained classification model and each event in an event set, and determining an event corresponding to each piece of triggering information, wherein the event is an event that happens outside and that is determinable for the intelligent device when the intelligent device detects the triggering information; ;

performing deduplication processing on all determined events to obtain an event list including at least one to-be-processed event triggered by the pieces of triggering information, wherein the deduplication processing comprises deleting repeated events such that when the event list includes multiple to-be-processed events, each event in the event list is different from each other;

selecting, for each determined to-be-processed event and from at least one task corresponding to the event, a target task corresponding to the event, wherein the task is a processing manner available to the intelligent device for the event that happens outside;

and

an execution module, configured for executing the target task corresponding to each event.

12. The apparatus according to claim 11, wherein the determining module is configured to:
for each determined event, select, from the at least one task corresponding to the event and based on a selection probability of each of the at least one task corresponding to the event, the target task corresponding to the event.

13. The apparatus according to claim 12, wherein the apparatus further comprises:
an adjustment module, configured to: when a satisfaction degree value entered for execution of a first task of a target task corresponding to a first event is received, adjust, based on the entered satisfaction degree value, a selection probability of the first task corresponding to the first event.

14. The apparatus according to any one of claims 11 to 13, wherein the determining module is further configured to:

determine, based on pre-stored importance and urgency that are corresponding to each event in an event set, importance and urgency that are corresponding to each of the at least one event; and

determine, for each event, a priority of the event based on the determined importance and urgency that are corresponding to the event; and

the execution module is configured to:
execute, based on the priority of each event in descending order of priorities, the target task corresponding to each event.

15. The apparatus according to claim 14, wherein the determining module is configured to:

for each event, obtain an actual cost and an expected cost of previous execution of a task corresponding to the event;

determine, based on the actual cost and the expected cost of the previous execution of the task corresponding to the event, an expected cost required for current execution of the target task corresponding to the event; and

determine the priority of the event based on the determined importance and urgency that are corresponding to the event and the determined expected cost required for the current execution of the target task corresponding to the event.

16. The apparatus according to claim 14, wherein the determining module is further configured to:

when an instruction for adjusting a position corresponding to a second event from a first position to a second position is received, obtain an excitation factor corresponding to each position in an importance-urgency matrix for the adjustment instruction, wherein an excitation factor corresponding to the second position is largest, and an excitation factor corresponding to the first position is smallest;

calculate, based on the obtained excitation factor corresponding to each position in the importance-urgency matrix and corresponding probabilities of the second event in positions in the importance-urgency matrix, new corresponding probabilities of the second event in the positions in the importance-urgency matrix; and

determine, based on the new corresponding probabilities of the second event in the positions in the importance-urgency matrix, the second position corresponding to a new largest probability as the position corresponding to the event.

17. The apparatus according to claim 14, wherein the determining module is further configured to:

when an instruction for adjusting a position corresponding to a second event from a first position to a second position is received, determine a corresponding probability of the second event in the first position in an importance-urgency matrix as a new corresponding probability of the second event in the second position, and determine a corresponding probability of the second event in the second position in the importance-urgency matrix as a new corresponding probability of the second event in the first position; and

determine, based on new corresponding probability of the second event in positions in the importance-urgency matrix, the second position corresponding to a new largest probability as the position corresponding to the event.

18. A computer-readable storage medium comprising at least one instruction which, when executed by a processor, cause the processor to carry out the method for executing a task according to any one of claims 1-10.


**Patentansprüche**

1. Verfahren zum Ausführen einer Aufgabe durch eine intelligente Vorrichtung, wobei die intelligente Vorrichtung eine Vielzahl von Sensorkomponenten umfasst, wobei die Vielzahl von Sensorkomponenten mindestens eine erste Sensorkomponente eines ersten Typs und eine zweite Sensorkomponente eines zweiten Typs beinhaltet, wobei jede Sensorkomponente eine Auslöseinformation erkennt, wobei die Auslöseinformation externe Informationen sind, die von der intelligenten Vorrichtung unter Verwendung der Sensorkomponenten erkannt werden, wobei die jeweils von der ersten und der zweiten Sensorkomponente erkannten Auslöseinformationen unterschiedlicher Art sind, wobei das Verfahren Folgendes umfasst:

wenn die intelligente Vorrichtung eine erste Auslöseinformation erkennt (201), die von der ersten Sensorkomponente erkannt wurde, und ferner gleichzeitig mit dem Erkennen der ersten Auslöseinformation eine zweite Auslöseinformation erkennt, die von der zweiten Sensorkomponente erkannt wurde,

Klassifizieren jeder erfassten Auslöseinformation auf Grundlage eines vorab trainierten Klassifizierungsmodells und jedes Ereignisses in einem Ereignissatz und Bestimmen eines Ereignisses, das jeder Auslöseinformation entspricht, wobei es sich bei dem Ereignis um ein Ereignis handelt, das extern stattfindet und das für die intelligente Vorrichtung bestimmbar ist, wenn die intelligente Vorrichtung die Auslöseinformation erfasst;

Durchführen einer Deduplizierungsverarbeitung für alle bestimmten Ereignisse, um eine Ereignisliste zu erlangen, die mindestens ein zu verarbeitendes Ereignis enthält, das durch die Auslöseinformationen ausgelöst wird, wobei die Deduplizierungsverarbeitung das Löschen wiederholter Ereignisse umfasst, sodass sich, wenn die Ereignisliste mehrere zu verarbeitende Ereignisse enthält, alle Ereignisse in der Ereignisliste voneinander unterscheiden;

Auswählen (202) einer dem Ereignis entsprechenden Zielaufgabe für jedes bestimmte zu verarbeitende Ereignis aus mindestens einer dem Ereignis entsprechenden Aufgabe, wobei die Aufgabe eine der intelligenten Vorrichtung für das extern stattfindende Ereignis zur Verfügung stehende Verarbeitungsart ist; und

Ausführen (203) der Zielaufgabe, die jedem Ereignis entspricht.

2. Verfahren nach Anspruch 1, wobei das Auswählen einer dem Ereignis entsprechenden Zielaufgabe für jedes bestimmte Ereignis und aus mindestens einer dem Ereignis entsprechenden Aufgabe Folgendes umfasst:
Auswählen der dem Ereignis entsprechenden Zielaufgabe für jedes bestimmte Ereignis aus der mindestens einen dem Ereignis entsprechenden Aufgabe und basierend auf einer Auswahlwahrscheinlichkeit jeder der mindestens einen dem Ereignis entsprechenden Aufgabe.

3. Verfahren nach Anspruch 2, wobei das Verfahren ferner Folgendes umfasst:
wenn ein für die Ausführung einer ersten Aufgabe einer Zielaufgabe eingegebener Zufriedenheitsgradwert empfangen wird, der einem ersten Ereignis entspricht, Anpassen einer Auswahlwahrscheinlichkeit der ersten Aufgabe, die dem ersten Ereignis entspricht, basierend auf dem eingegebenen Zufriedenheitsgradwert.

4. Verfahren nach einem der Ansprüche 1 bis 3, wobei das Verfahren ferner Folgendes umfasst:

Bestimmen der Wichtigkeit und Dringlichkeit, die jedem des mindestens einen Ereignisses entspricht, basierend auf der vorab gespeicherten Wichtigkeit und Dringlichkeit, die jedem Ereignis im Ereignissatz entspricht; und
Bestimmen einer Priorität des Ereignisses für jedes Ereignis auf Grundlage der bestimmten Wichtigkeit und Dringlichkeit, die dem Ereignis entsprechen, wobei
das Ausführen der Zielaufgabe entsprechend jedem Ereignis Folgendes umfasst:
Ausführen der jedem Ereignis entsprechenden Zielaufgabe basierend auf der Priorität jedes Ereignisses in absteigender Prioritätsreihenfolge.

5. Verfahren nach Anspruch 4, wobei das Bestimmen einer Priorität des Ereignisses für jedes Ereignis auf Grundlage der bestimmten Wichtigkeit und Dringlichkeit, die dem Ereignis entsprechen, Folgendes umfasst:

Erlangen der tatsächlichen Kosten und der erwarteten Kosten einer vorherigen Ausführung einer dem Ereignis entsprechenden Aufgabe für jedes Ereignis;
Bestimmen der erwarteten Kosten, die für die aktuelle Ausführung der dem Ereignis entsprechenden Zielaufgabe erforderlich sind, basierend auf den tatsächlichen Kosten und den erwarteten Kosten der vorherigen Ausführung der dem Ereignis entsprechenden Aufgabe; und
Bestimmen der Priorität des Ereignisses auf Grundlage der bestimmten Wichtigkeit und Dringlichkeit, die dem Ereignis entsprechen, und der bestimmten erwarteten Kosten, der für die aktuelle Ausführung der dem Ereignis entsprechenden Zielaufgabe erforderlich sind.

6. Verfahren nach Anspruch 4, wobei das Bestimmen der Wichtigkeit und Dringlichkeit, die jedem der mindestens einen Ereignisse entsprechen, auf Grundlage der vorab gespeicherten Wichtigkeit und Dringlichkeit, die jedem Ereignis im Ereignissatz entsprechen, Folgendes umfasst:
Bestimmen der Wichtigkeit und Dringlichkeit, die jedem des mindestens einen Ereignisses entsprechen, auf Grundlage einer vorab gespeicherten Wichtigkeits-Dringlichkeits-Matrix und einem Ereignis, das jeder Position in der Wichtigkeits-Dringlichkeits-Matrix entspricht, wobei jede Position in der Wichtigkeits-Dringlichkeits-Matrix die Wichtigkeit und Dringlichkeit des Ereignisses darstellt, das der Position entspricht.

7. Verfahren nach Anspruch 6, wobei das Verfahren ferner Folgendes umfasst:
für jedes Ereignis im Ereignissatz auf Grundlage vorab gespeicherter entsprechender Wahrscheinlichkeiten des Ereignisses in Positionen in der Wichtigkeits-Dringlichkeits-Matrix Bestimmen einer Position, die einer größten Wahrscheinlichkeit entspricht, als eine Position, die dem Ereignis entspricht.

8. Verfahren nach Anspruch 7, wobei das Verfahren ferner Folgendes umfasst:

wenn eine Anweisung zum Anpassen einer Position, die einem zweiten Ereignis entspricht, von einer ersten Position zu einer zweiten Position empfangen wird, Erlangen eines Anregungsfaktors, der jeder Position in der Wichtigkeit-Dringlichkeit-Matrix für die Anpassungsanweisung entspricht, wobei ein Anregungsfaktor, der der zweiten Position entspricht, am größten und ein Anregungsfaktor, der der ersten Position entspricht, am kleinsten ist;
Berechnen neuer entsprechender Wahrscheinlichkeiten des zweiten Ereignisses in den Positionen in der Wichtigkeit-Dringlichkeit-Matrix basierend auf dem erlangten Anregungsfaktor, der jeder Position in der Wichtigkeit-Dringlichkeit-Matrix entspricht, und den entsprechenden Wahrscheinlichkeiten des zweiten Ereignisses in den Positionen in der Wichtigkeit-Dringlichkeit-Matrix; und
Bestimmen der zweiten Position, die einer neuen größten Wahrscheinlichkeit entspricht, als die Position, die dem Ereignis entspricht, basierend auf den neuen entsprechenden Wahrscheinlichkeiten des zweiten Ereignisses in den Positionen in der Wichtigkeits-Dringlichkeits-Matrix.

9. Verfahren nach Anspruch 7, wobei das Verfahren ferner Folgendes umfasst:

wenn eine Anweisung zum Anpassen einer Position, die einem zweiten Ereignis entspricht, von einer ersten Position zu einer zweiten Position empfangen wird, Bestimmen einer entsprechenden Wahrscheinlichkeit des zweiten Ereignisses an der ersten Position in der Wichtigkeit-Dringlichkeit-Matrix als eine neue entsprechende Wahrscheinlichkeit des zweiten Ereignisses an der zweiten Position, und Bestimmen einer entsprechenden Wahrscheinlichkeit des zweiten Ereignisses an der zweiten Position in der Wichtigkeit-Dringlichkeit-Matrix als eine neue entsprechende Wahrscheinlichkeit des zweiten Ereignisses an der ersten Position; und Bestimmen der zweiten Position, die einer neuen größten Wahrscheinlichkeit entspricht, als die Position, die dem Ereignis entspricht, basierend auf neuen entsprechenden Wahrscheinlichkeiten des zweiten Ereignisses in den Positionen in der Wichtigkeits-Dringlichkeits-Matrix.

10. Verfahren nach Anspruch 8 oder 9, wobei das Verfahren ferner Folgendes umfasst:
wenn das zweite Ereignis ein zu verarbeitendes Ereignis ist, Neubestimmen einer dem zweiten Ereignis entsprechenden Priorität auf Grundlage der Wichtigkeit und Dringlichkeit, die der zweiten Position in der Wichtigkeits-Dringlichkeits-Matrix entsprechen.

11. Einrichtung zum Ausführen einer Aufgabe durch eine intelligente Vorrichtung, wobei die intelligente Vorrichtung einen Prozessor (110), einen Sensor (150) und einen Speicher (120) umfasst, wobei der Prozessor dazu konfiguriert ist, in dem Speicher gespeicherte Anweisungen auszuführen, und wobei die intelligente Vorrichtung eine Vielzahl von Sensorkomponenten umfasst, wobei die Vielzahl von Sensorkomponenten mindestens eine erste Sensorkomponente eines ersten Typs und eine zweite Sensorkomponente eines zweiten Typs beinhaltet, wobei jede Sensorkomponente eine Auslöseinformation erkennt, wobei die Auslöseinformation externe Informationen sind, die von der intelligenten Vorrichtung unter Verwendung der Sensorkomponenten erkannt werden, wobei die jeweils von der ersten und der zweiten Sensorkomponente erkannten Auslöseinformationen unterschiedlicher Art sind, wobei die Einrichtung Folgendes umfasst:
ein Bestimmungsmodul, das zu Folgendem konfiguriert ist:

wenn die intelligente Vorrichtung eine erste Auslöseinformation erkennt, die von der ersten Sensorkomponente erkannt wurde, und außerdem gleichzeitig mit der Erkennung der ersten Auslöseinformation eine zweite Auslöseinformation erkennt, die von der zweiten Sensorkomponente erkannt wurde,
Klassifizieren jeder erfassten Auslöseinformation auf Grundlage eines vorab trainierten Klassifizierungsmodells und jedes Ereignisses in einem Ereignissatz und Bestimmen eines Ereignisses, das jeder Auslöseinformation entspricht, wobei es sich bei dem Ereignis um ein Ereignis handelt, das extern stattfindet und das für die intelligente Vorrichtung bestimmbar ist, wenn die intelligente Vorrichtung die Auslöseinformation erfasst;
Durchführen einer Deduplizierungsverarbeitung für alle bestimmten Ereignisse, um eine Ereignisliste zu erlangen, die mindestens ein zu verarbeitendes Ereignis enthält, das durch die Auslöseinformationen ausgelöst wird, wobei die Deduplizierungsverarbeitung das Löschen wiederholter Ereignisse umfasst, sodass sich, wenn die Ereignisliste mehrere zu verarbeitende Ereignisse enthält, alle Ereignisse in der Ereignisliste voneinander unterscheiden;
Auswählen einer dem Ereignis entsprechenden Zielaufgabe für jedes bestimmte zu verarbeitende Ereignis aus mindestens einer dem Ereignis entsprechenden Aufgabe, wobei die Aufgabe eine der intelligenten Vorrichtung für das extern stattfindende Ereignis zur Verfügung stehende Verarbeitungsart ist;
und
ein Ausführungsmodul, das für die Ausführung der Zielaufgabe entsprechend jedem Ereignis konfiguriert ist.

12. Einrichtung nach Anspruch 11, wobei das Bestimmungsmodul zu Folgendem konfiguriert ist:
Auswählen der dem Ereignis entsprechenden Zielaufgabe aus der mindestens einen dem Ereignis entsprechenden Aufgabe für jedes bestimmte Ereignis und basierend auf einer Auswahlwahrscheinlichkeit jeder der mindestens einen dem Ereignis entsprechenden Aufgabe.

13. Einrichtung nach Anspruch 12, wobei die Einrichtung ferner Folgendes umfasst:
ein Anpassungsmodul, das zu Folgendem konfiguriert ist: wenn ein für die Ausführung einer ersten Aufgabe einer Zielaufgabe eingegebener Zufriedenheitsgradwert empfangen wird, der einem ersten Ereignis entspricht, Anpassen einer Auswahlwahrscheinlichkeit der ersten Aufgabe, die dem ersten Ereignis entspricht, basierend auf dem eingegebenen Zufriedenheitsgradwert.

14. Einrichtung nach einem der Ansprüche 11 bis 13, wobei das vierte Bestimmungsmodul ferner zu Folgendem konfiguriert ist:

Bestimmen der Wichtigkeit und Dringlichkeit, die jedem des mindestens einen Ereignisses entspricht, basierend auf der vorab gespeicherten Wichtigkeit und Dringlichkeit, die jedem Ereignis in einem Ereignissatz entspricht; und
Bestimmen einer Priorität des Ereignisses für jedes Ereignis auf Grundlage der bestimmten Wichtigkeit und

**EP 3 608 777 B1**

Dringlichkeit, die dem Ereignis entsprechen; und
das Ausführungsmodul zu Folgendem konfiguriert ist:
Ausführen der jedem Ereignis entsprechenden Zielaufgabe basierend auf der Priorität jedes Ereignisses in absteigender Prioritätsreihenfolge.

**15.** Einrichtung nach Anspruch 14, wobei das Bestimmungsmodul zu Folgendem konfiguriert ist:

Erlangen der tatsächlichen Kosten und der erwarteten Kosten einer vorherigen Ausführung einer dem Ereignis entsprechenden Aufgabe für jedes Ereignis;
Bestimmen der erwarteten Kosten, die für die aktuelle Ausführung der dem Ereignis entsprechenden Zielaufgabe erforderlich sind, basierend auf den tatsächlichen Kosten und den erwarteten Kosten der vorherigen Ausführung der dem Ereignis entsprechenden Aufgabe; und
Bestimmen der Priorität des Ereignisses auf Grundlage der bestimmten Wichtigkeit und Dringlichkeit, die dem Ereignis entsprechen, und der bestimmten erwarteten Kosten, der für die aktuelle Ausführung der dem Ereignis entsprechenden Zielaufgabe erforderlich sind.

**16.** Einrichtung nach Anspruch 14, wobei das Bestimmungsmodul ferner zu Folgendem konfiguriert ist:

wenn eine Anweisung zum Anpassen einer Position, die einem zweiten Ereignis entspricht, von einer ersten Position zu einer zweiten Position empfangen wird, Erlangen eines Anregungsfaktors, der jeder Position in einer Wichtigkeit-Dringlichkeit-Matrix für die Anpassungsanweisung entspricht, wobei ein Anregungsfaktor, der der zweiten Position entspricht, am größten und ein Anregungsfaktor, der der ersten Position entspricht, am kleinsten ist;
Berechnen neuer entsprechender Wahrscheinlichkeiten des zweiten Ereignisses in Positionen in der Wichtigkeit-Dringlichkeit-Matrix basierend auf dem erlangten Anregungsfaktor, der jeder Position in der Wichtigkeit-Dringlichkeit-Matrix entspricht, und den entsprechenden Wahrscheinlichkeiten des zweiten Ereignisses in den Positionen in der Wichtigkeit-Dringlichkeit-Matrix; und
Bestimmen der zweiten Position, die einer neuen größten Wahrscheinlichkeit entspricht, als die Position, die dem Ereignis entspricht, basierend auf den neuen entsprechenden Wahrscheinlichkeiten des zweiten Ereignisses in den Positionen in der Wichtigkeits-Dringlichkeits-Matrix.

**17.** Einrichtung nach Anspruch 14, wobei das Bestimmungsmodul ferner zu Folgendem konfiguriert ist:

wenn eine Anweisung zum Anpassen einer Position, die einem zweiten Ereignis entspricht, von einer ersten Position zu einer zweiten Position empfangen wird, Bestimmen einer entsprechenden Wahrscheinlichkeit des zweiten Ereignisses an der ersten Position in einer Wichtigkeit-Dringlichkeit-Matrix als eine neue entsprechende Wahrscheinlichkeit des zweiten Ereignisses an der zweiten Position, und Bestimmen einer entsprechenden Wahrscheinlichkeit des zweiten Ereignisses an der zweiten Position in der Wichtigkeit-Dringlichkeit-Matrix als eine neue entsprechende Wahrscheinlichkeit des zweiten Ereignisses an der ersten Position; und
Bestimmen der zweiten Position, die einer neuen größten Wahrscheinlichkeit entspricht, als die Position, die dem Ereignis entspricht, basierend auf einer neuen entsprechenden Wahrscheinlichkeit des zweiten Ereignisses in Positionen in der Wichtigkeits-Dringlichkeits-Matrix.

**18.** Computerlesbares Speichermedium, umfassend mindestens eine Anweisung, die bei Ausführung durch einen Prozessor bewirkt, dass der Prozessor das Verfahren zum Ausführen einer Aufgabe nach einem der Ansprüche 1-10 durchführt.

**Revendications**

**1.** Procédé pour exécuter une tâche par un dispositif intelligent, dans lequel le dispositif intelligent comprend une pluralité de composants de capteur, dans lequel la pluralité de composants de capteur comporte au moins un premier composant de capteur d'un premier type et un second composant de capteur d'un second type, chaque composant de capteur détecte une information de déclenchement, dans lequel l'information de déclenchement est une information extérieure détectée par le dispositif intelligent à l'aide des composants de capteur, dans lequel les informations de déclenchement détectées respectivement par les premier et second composants de capteur sont de types différents, dans lequel le procédé comprend :

22

lorsque le dispositif intelligent détecte (201) une première information de déclenchement détectée par le premier composant de capteur et détecte également une seconde information de déclenchement détectée par le second composant de capteur en même temps que la détection de la première information de déclenchement,

le classement de chaque information de déclenchement détectée sur la base d'un modèle de classification pré-entraîné et de chaque événement dans un ensemble d'événements, et la détermination d'un événement correspondant à chaque information de déclenchement, dans lequel l'événement est un événement qui se produit à l'extérieur et qui est déterminable pour le dispositif intelligent lorsque le dispositif intelligent détecte les informations de déclenchement ;

la réalisation d'un traitement de déduplication sur tous les événements déterminés pour obtenir une liste d'événements comportant au moins un événement à traiter déclenché par les informations de déclenchement, dans lequel le traitement de déduplication comprend la suppression d'événements répétés de telle sorte que lorsque la liste d'événements comporte plusieurs événements à traiter, chaque événement dans la liste d'événements est différent de l'autre ;

la sélection (202), pour chaque événement à traiter déterminé et parmi au moins une tâche correspondant à l'événement, d'une tâche cible correspondant à l'événement, dans lequel la tâche est un mode de traitement disponible pour le dispositif intelligent pour l'événement qui se produit à l'extérieur ; et l'exécution (203) de la tâche cible correspondant à chaque événement.

2. Procédé selon la revendication 1, dans lequel la sélection, pour chaque événement déterminé et parmi au moins une tâche correspondant à l'événement, d'une tâche cible correspondant à l'événement comprend :
pour chaque événement déterminé, la sélection de la tâche cible correspondant à l'événement, parmi l'au moins une tâche correspondant à l'événement et sur la base d'une probabilité de sélection de chacune de l'au moins une tâche correspondant à l'événement.

3. Procédé selon la revendication 2, dans lequel le procédé comprend également :
lorsqu'une valeur de degré de satisfaction entrée pour l'exécution d'une première tâche d'une tâche cible correspondant à un premier événement est reçue, l'ajustement, sur la base de la valeur de degré de satisfaction entrée, d'une probabilité de sélection de la première tâche correspondant au premier événement.

4. Procédé selon l'une quelconque des revendications 1 à 3, dans lequel le procédé comprend également :

la détermination, sur la base de l'importance et de l'urgence pré-stockées correspondant à chaque événement dans l'ensemble d'événements, de l'importance et de l'urgence correspondant à chacun de l'au moins un événement ; et
la détermination, pour chaque événement, d'une priorité de l'événement sur la base de l'importance et de l'urgence déterminées qui correspondent à l'événement, dans lequel
l'exécution de la tâche cible correspondant à chaque événement comprend :
l'exécution, sur la base de la priorité de chaque événement par ordre décroissant de priorités, de la tâche cible correspondant à chaque événement.

5. Procédé selon la revendication 4, dans lequel la détermination, pour chaque événement, d'une priorité de l'événement sur la base de l'importance et de l'urgence déterminées qui correspondent à l'événement comprend :

pour chaque événement, l'obtention d'un coût réel et d'un coût attendu d'exécution précédente d'une tâche correspondant à l'événement ;
la détermination, sur la base du coût réel et du coût attendu de l'exécution précédente de la tâche correspondant à l'événement, d'un coût attendu requis pour l'exécution actuelle de la tâche cible correspondant à l'événement ; et
la détermination de la priorité de l'événement sur la base de l'importance et de l'urgence déterminées correspondant à l'événement et du coût attendu déterminé requis pour l'exécution actuelle de la tâche cible correspondant à l'événement.

6. Procédé selon la revendication 4, dans lequel la détermination, sur la base de l'importance et de l'urgence pré-stockées qui correspondent à chaque événement dans l'ensemble d'événements, de l'importance et de l'urgence qui correspondent à chacun de l'au moins un événement comprend :
la détermination, sur la base d'une matrice importance-urgence pré-stockée et d'un événement correspondant à chaque position dans la matrice importance-urgence, de l'importance et de l'urgence qui correspondent à chacun de l'au moins un événement, dans lequel chaque position dans la matrice importance-urgence représente l'importance et l'urgence de l'événement correspondant à la position.

**7.** Procédé selon la revendication 6, dans lequel le procédé comprend également :
pour chaque événement dans l'ensemble d'événements, la détermination, sur la base de probabilités correspondantes pré-stockées de l'événement dans des positions dans la matrice importance-urgence, d'une position correspondant à une probabilité la plus élevée en tant que position correspondant à l'événement.

**8.** Procédé selon la revendication 7, dans lequel le procédé comprend également :

lorsqu'une instruction d'ajustement d'une position correspondant à un second événement d'une première position à une seconde position est reçue, l'obtention d'un facteur d'excitation correspondant à chaque position dans la matrice importance-urgence pour l'instruction d'ajustement, dans lequel un facteur d'excitation correspondant à la seconde position est le plus grand, et un facteur d'excitation correspondant à la première position est le plus petit ;

le calcul, sur la base du facteur d'excitation obtenu correspondant à chaque position dans la matrice importance-urgence et des probabilités correspondantes du second événement dans les positions dans la matrice importance-urgence, de nouvelles probabilités correspondantes du second événement dans les positions dans la matrice importance-urgence ; et

la détermination, sur la base des nouvelles probabilités correspondantes du second événement dans les positions dans la matrice importance-urgence, de la seconde position correspondant à une nouvelle probabilité la plus grande comme position correspondant à l'événement.

**9.** Procédé selon la revendication 7, dans lequel le procédé comprend également :

lorsqu'une instruction d'ajustement d'une position correspondant à un second événement d'une première position à une seconde position est reçue, la détermination d'une probabilité correspondante du second événement dans la première position dans la matrice importance-urgence en tant que nouvelle probabilité correspondante du second événement dans la seconde position, et la détermination d'une probabilité correspondante du second événement dans la seconde position dans la matrice importance-urgence en tant que nouvelle probabilité correspondante du second événement dans la première position ; et

la détermination, sur la base de nouvelles probabilités correspondantes du second événement dans les positions dans la matrice importance-urgence, de la seconde position correspondant à une nouvelle probabilité la plus grande comme position correspondant à l'événement.

**10.** Procédé selon la revendication 8 ou 9, dans lequel le procédé comprend également :
lorsque le second événement est un événement à traiter, la redétermination, sur la base de l'importance et de l'urgence qui correspondent à la seconde position dans la matrice importance-urgence, d'une priorité correspondant au second événement.

**11.** Appareil pour exécuter une tâche par un dispositif intelligent, dans lequel le dispositif intelligent comprend un processeur (110), un capteur (150), et une mémoire (120), dans lequel le processeur est configuré pour exécuter une instruction stockée dans la mémoire, et dans lequel le dispositif intelligent comprend une pluralité de composants de capteur, dans lequel la pluralité de composants de capteur comporte au moins un premier composant de capteur d'un premier type et un second composant de capteur d'un second type, chaque composant de capteur détecte une information de déclenchement, dans lequel l'information de déclenchement est une information extérieure détectée par le dispositif intelligent à l'aide des composants de capteur, dans lequel les informations de déclenchement détectées respectivement par les premier et second composants de capteur sont de types différents, dans lequel l'appareil comprend :
un module de détermination, configuré pour :

lorsque le dispositif intelligent détecte une première information de déclenchement détectée par le premier composant de capteur et détecte également une seconde information de déclenchement détectée par le second composant de capteur en même temps que la détection de la première information de déclenchement, le classement de chaque information de déclenchement détectée sur la base d'un modèle de classification pré-entraîné et de chaque événement dans un ensemble d'événements, et la détermination d'un événement correspondant à chaque information de déclenchement, dans lequel l'événement est un événement qui se produit à l'extérieur et qui est déterminable pour le dispositif intelligent lorsque le dispositif intelligent détecte les informations de déclenchement ;

la réalisation d'un traitement de déduplication sur tous les événements déterminés pour obtenir une liste d'événements comportant au moins un événement à traiter déclenché par les informations de déclenchement, dans lequel le traitement de déduplication comprend la suppression d'événements répétés de telle sorte que lorsque la liste d'événements comporte plusieurs événements à traiter, chaque événement dans la liste d'événements est différent de l'autre ;

la sélection, pour chaque événement à traiter déterminé et parmi au moins une tâche correspondant à l'événement, d'une tâche cible correspondant à l'événement, dans lequel la tâche est un mode de traitement disponible pour le dispositif intelligent pour l'événement qui se produit à l'extérieur ;

et

un module d'exécution, configuré pour exécuter la tâche cible correspondant à chaque événement.

**12.** Appareil selon la revendication 11, dans lequel le module de détermination est configuré pour :
pour chaque événement déterminé, sélectionner la tâche cible correspondant à l'événement, parmi l'au moins une tâche correspondant à l'événement et sur la base d'une probabilité de sélection de chacune de l'au moins une tâche correspondant à l'événement.

**13.** Appareil selon la revendication 12, dans lequel l'appareil comprend également :
un module d'ajustement, configuré pour : lorsqu'une valeur de degré de satisfaction entrée pour l'exécution d'une première tâche d'une tâche cible correspondant à un premier événement est reçue, ajuster, sur la base de la valeur de degré de satisfaction entrée, une probabilité de sélection de la première tâche correspondant au premier événement.

**14.** Appareil selon l'une quelconque des revendications 11 à 13, dans lequel le module de détermination est également configuré pour :

déterminer, sur la base de l'importance et de l'urgence pré-stockées qui correspondent à chaque événement dans un ensemble d'événements, l'importance et l'urgence qui correspondent à chacun de l'au moins un événement ; et

déterminer, pour chaque événement, une priorité de l'événement sur la base de l'importance et de l'urgence déterminées qui correspondent à l'événement ; et

le module d'exécution est configuré pour :

exécuter, sur la base de la priorité de chaque événement par ordre décroissant de priorités, la tâche cible correspondant à chaque événement.

**15.** Appareil selon la revendication 14, dans lequel le module de détermination est configuré pour :

pour chaque événement, obtenir un coût réel et un coût attendu d'exécution précédente d'une tâche correspondant à l'événement ; déterminer, sur la base du coût réel et du coût attendu de l'exécution précédente de la tâche correspondant à l'événement, un coût attendu requis pour l'exécution actuelle de la tâche cible correspondant à l'événement ; et

déterminer la priorité de l'événement sur la base de l'importance et de l'urgence déterminées qui correspondent à l'événement et au coût attendu déterminé requis pour l'exécution actuelle de la tâche cible correspondant à l'événement.

**16.** Appareil selon la revendication 14, dans lequel le module de détermination est également configuré pour :

lorsqu'une instruction d'ajustement d'une position correspondant à un second événement d'une première position à une seconde position est reçue, obtenir un facteur d'excitation correspondant à chaque position dans la matrice importance-urgence pour l'instruction d'ajustement, dans lequel un facteur d'excitation correspondant à la seconde position est le plus grand, et un facteur d'excitation correspondant à la première position est le plus petit ;

calculer, sur la base du facteur d'excitation obtenu correspondant à chaque position dans la matrice importance-urgence et des probabilités correspondantes du second événement dans les positions dans la matrice importance-urgence, de nouvelles probabilités correspondantes du second événement dans les positions dans la matrice importance-urgence ; et

déterminer, sur la base des nouvelles probabilités correspondantes du second événement dans les positions dans la matrice importance-urgence, la seconde position correspondant à une nouvelle probabilité la plus grande comme position correspondant à l'événement.

**17.** Appareil selon la revendication 14, dans lequel le module de détermination est également configuré pour :

lorsqu'une instruction d'ajustement d'une position correspondant à un second événement d'une première position à une seconde position est reçue, déterminer une probabilité correspondante du second événement dans la première position dans la matrice importance-urgence en tant que nouvelle probabilité correspondante du second événement dans la seconde position, et déterminer une probabilité correspondante du second événement dans la seconde position dans la matrice importance-urgence en tant que nouvelle probabilité correspondante du second événement dans la première position ; et

déterminer, sur la base de la nouvelle probabilité correspondante du second événement dans les positions dans la matrice importance-urgence, la seconde position correspondant à une nouvelle probabilité la plus grande comme position correspondant à l'événement.

18. Support de stockage lisible par ordinateur comprenant au moins une instruction qui, lorsqu'elle est exécutée par un processeur, amène le processeur à réaliser le procédé pour exécuter une tâche selon l'une quelconque des revendications 1 à 10.

Intelligent device

Memory ⌒ 120

110

140 ⌒ Transmitter — Processor — Sensor ⌒ 150

Receiver ⌒ 130

FIG. 1

When an intelligent device detects at least one piece of triggering information, determine, based on the at least one piece of triggering information, at least one to-be-processed event triggered by the at least one piece of triggering information, where the at least one event is different from each other ⌒ 201

Select, for each determined event and from at least one task corresponding to the event, a target task corresponding to the event ⌒ 202

Execute the target task corresponding to each event ⌒ 203

FIG. 2

FIG. 3(a)

FIG. 3(b)

| Event | Hear a voice calling for help or an abnormal voice | | Find a person falling on the ground | |
|---|---|---|---|---|

| Target task | Move to a place | | Recognize an identity | | Make a video call with a family member |
|---|---|---|---|---|---|

FIG. 4(a)

Urgency

| | | | |
|---|---|---|---|
| The robot has low battery or encounters a minor fault | The robot is faulty and cannot work | Find a person falling on the ground | Find that a person shows signs of illness |
| Chatting with a family member | Find that a child is late coming home | Spot a stranger | Hear a voice calling for help or an abnormal voice |
| The child has played games for over an hour | Find that the gate is open | Receive an instruction for searching for an object | Find that the floor needs to be swept |
| Everything is ok | Receive an instruction for fetching an object | Nobody is home but water or electricity is not turned off | Receive an instruction for moving to a place |

Importance

FIG. 4(b)

| The robot has low battery or encounters a minor fault | The robot is faulty and cannot work | Find a person falling on the ground | Find that a person shows signs of illness |
|---|---|---|---|
| Chatting with a family member | Find that a child is late coming home | Spot a stranger | Hear a voice calling for help or an abnormal voice |
| The child has played games for over an hour | Find that the gate is open | Receive an instruction for searching for an object | Find that the floor needs to be swept |
| Everything is ok | Receive an instruction for fetching an object | Nobody is home but water or electricity is not turned off | Receive an instruction for moving to a place |

| Current task queue |
|---|
| Position |
| Sweep the floor |
| End |

## FIG. 5(a)

| The robot has low battery or encounters a minor fault | The robot is faulty and cannot work | Find a person falling on the ground | Find that a person shows signs of illness |
|---|---|---|---|
| Chatting with a family member | Find that a child is late coming home | Spot a stranger | Hear a voice calling for help or an abnormal voice |
| The child has played games for over an hour | Find that the gate is open | Receive an instruction for searching for an object | Find that the floor needs to be swept |
| Everything is ok | Receive an instruction for fetching an object | Nobody is home but water or electricity is not turned off | Receive an instruction for moving to a place |

| Current task queue |
|---|
| Sweep the floor |
| Search for an object |
| Move to a place |
| Fetch an object |
| End |

## FIG. 5(b)

| | | | |
|---|---|---|---|
| The robot has low battery or encounters a minor fault | The robot is faulty and cannot work | Find a person falling on the ground | Find that a person shows signs of illness |
| Chatting with a family member | Find that a child is late coming home | Spot a stranger | Hear a voice calling for help or an abnormal voice |
| The child has played games for over an hour | Find that the gate is open | Receive an instruction for searching for an object | Find that the floor needs to be swept |
| Everything is ok | Receive an instruction for fetching an object | Nobody is home but water or electricity is not turned off | Receive an instruction for moving to a place |

| | | | |
|---|---|---|---|
| The robot has low battery or encounters a minor fault | The robot is faulty and cannot work | Find a person falling on the ground | Find that a person shows signs of illness |
| Chatting with a family member | Find that a child is late coming home | Spot a stranger | Hear a voice calling for help or an abnormal voice |
| The child has played games for over an hour | Find that the gate is open | Receive an instruction for searching for an object | Receive an instruction for fetching an object |
| Everything is ok | Find that the floor needs to be swept | Nobody is home but water or electricity is not turned off | Receive an instruction for moving to a place |

FIG. 5(c)

| | | | | | |
|---|---|---|---|---|---|
| The robot has low battery or encounters a minor fault | The robot is faulty and cannot work | Find a person falling on the ground | Find that a person shows signs of illness | | Current task queue |
| Chatting with a family member | Find that a child is late coming home | Spot a stranger | Hear a voice calling for help or an abnormal voice | | Search for an object |
| The child has played games for over an hour | Find that the gate is open | Receive an instruction for searching for an object | Receive an instruction for fetching an object | ⇨ | Move to a place |
| | | | | | Fetch an object |
| Everything is ok | Find that the floor needs to be swept | Nobody is home but water or electricity is not turned off | Receive an instruction for moving to a place | | Sweep the floor |
| | | | | | End |

FIG. 5(d)

| | | | | | |
|---|---|---|---|---|---|
| The robot has low battery or encounters a minor fault | The robot is faulty and cannot work | Find a person falling on the ground | Find that a person shows signs of illness | | |
| Chatting with a family member | Find that a child is late coming home | Spot a stranger | Hear a voice calling for help or an abnormal voice | | Current task queue |
| The child has played games for over an hour | Find that the gate is open | Receive an instruction for searching for an object | Receive an instruction for fetching an object | ⇨ | Sweep the floor |
| Everything is ok | Find that the floor needs to be swept | Nobody is home but water or electricity is not turned off | Receive an instruction for moving to a place | | End |

FIG. 5(e)

Determining
module — 610

Execution module — 620

FIG. 6

Determining
module — 610

Execution module — 620

Adjustment module — 630

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9687984 B2
- CN 106484253 A
- CN 106896767 A